(19)

**Europäisches Patentamt**
**European Patent Office**
**Office européen des brevets**

(11) **EP 2 220 755 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(21) Anmeldenummer: **08862689.0**

(22) Anmeldetag: **20.11.2008**

(51) Int Cl.:
**H02M 7/5387** (2007.01)    **H02P 6/18** (2006.01)

(86) Internationale Anmeldenummer:
**PCT/EP2008/009797**

(87) Internationale Veröffentlichungsnummer:
**WO 2009/077051 (25.06.2009 Gazette 2009/26)**

(54) **ELEKTRONISCH KOMMUTIERTER MOTOR**

ELECTRONICALLY COMMUTED MOTOR

MOTEUR À COMMUTATION ÉLECTRONIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.12.2007 DE 102007063259**

(43) Veröffentlichungstag der Anmeldung:
**25.08.2010 Patentblatt 2010/34**

(73) Patentinhaber: **Ebm-Papst St. Georgen GmbH & CO. KG**
**78112 St. Georgen (DE)**

(72) Erfinder:
• **HOGG, Gerald**
  **79879 Wutach-Münchingen (DE)**
• **KARWATH, Arno**
  **78652 Deisslingen (DE)**

(74) Vertreter: **Raible, Tobias**
**Raible & Raible**
**Schoderstrasse 10**
**70192 Stuttgart (DE)**

(56) Entgegenhaltungen:
**US-A- 4 446 414      US-A1- 2005 206 341**
**US-B1- 6 366 483**

• **BLAABJERG F ET AL: "SINGLE CURRENT SENSOR TECHNIQUE IN THE DC LINK OF THREE-PHASE PWM- VS INVERTERS: A REVIEW AND A NOVEL SOLUTION" IEEE TRANSACTIONS ON INDUSTRY APPLICATIONS, IEEE SERVICE CENTER, PISCATAWAY, NJ, US, Bd. 33, Nr. 5, 1. September 1997 (1997-09-01), Seiten 1241-1253, XP000739841 ISSN: 0093-9994**

**Beschreibung**

Die Erfindung betrifft einen elektronisch kommutierten Motor, insbesondere zum Antrieb eines Lüfters.

Besonders in der Telekommunikationsbranche kann die von einem Lüfter ausgehende leitungsgebundene Störausstrahlung zu Störungen führen, die sich z. B. als Störgeräusche beim Telefonieren bemerkbar machen. Daher fordert diese Branche Lüfter mit einer geringen niederfrequenten leitungsgebundenen Störausstrahlung. Auch bei normalen Motoren ist dies vorteilhaft.

Aus der US 6 366 483 B1 ist eine Anordnung mit einem oder mehreren Induktionsmotoren bekannt. Es handelt sich um große Drehstrom-Asynchronmotoren mit Leistungen zwischen 1 000 und 10 000 PS, die über Umrichter aus einem Drehstromnetz gespeist werden und die zur Blindstromversorgung sowohl am Eingang eines gesteuerten Gleichrichters wie am Eingang der Phasen der ASM mit Kompensationskondensatoren versehen sind.

Diese Kondensatoren führen bei bestimmten Frequenzen zu Resonanzerscheinungen, und deshalb braucht man im Zwischenkreis des Umrichters eine große Glättungsdrossel, welche ihrerseits die Regelvorgänge verzögert. Auch wirkt der Zwischenkreisstrom sowohl auf den Regler für den gesteuerten Gleichrichter und auf den Regler für den Wechselrichter, und dadurch wird es schwierig, im Bereich der erwähnten Resonanzen ein solches komplexes System stabil zu halten. Deshalb braucht man entweder Dämpfungswiderstände parallel zu den Kompensationskondensatoren, oder aber eine aktive Dämpfung.

Der Regler für den gesteuerten Gleichrichter regelt die Anordnung auf einen cos φ = 1. Dies geschieht über eine Raumzeigertransformation.

Ein solches System ist in sich langsam, um Oszillationen zu vermeiden, und die Glättungsdrossel im Zwischenkreis des Umrichters hat die Funktion, rasche Stromänderungen zu unterdrücken.

Aus der US 2005/ 0206 341 A1 kennt man ebenfalls ein Raumzeigersystem. Der Strom in den einzelnen Phasen eines Drehstrommotors soll aus dem Strom im Zwischenkreis rekonstruiert werden. Das ist ein messtechnisches Problem, das aber keine Verbesserung von Störspannungen bewirkt.

Die Literaturstelle XP 000 739 841 befasst sich u. a. mit der Messung des Stromes in einem Gleichstrom-Zwischenkreis. Auch hier wird ein Raumzeigersystem verwendet. Man erkennt, dass der Strom im Zwischenkreis sehr starke Störkomponenten enthält, deren Größe und Form noch zusätzlich von der Kabellänge abhängt.

Als Abhilfe wird ein Stromwandler vorgeschlagen, der mit Hallsensoren arbeitet. Der Strom im Zwischenkreis schwankt sehr stark, d. h. es besteht kein Einfluss auf die Form des Stromes. Vielmehr soll auch hier die Höhe der Phasenströme rekonstruiert werden.

Die US 4 446 414 betrifft einen Antrieb mit einem Umrichter.

Einem gesteuerten Gleichrichter des Umrichters wird eine dreiphasige Wechselspannung zugeführt. Am Ausgang des gesteuerten Gleichrichters befindet sich ein Gleichstrom-Zwischenkreis mit einer Glättungsdrossel und einem Stromwandler, dessen Ausgangssignal über einen Wandler digitalisiert wird.

Die Gleichspannung am Zwischenkreis wird über einen Wechselrichter in eine Dreiphasenspannung der gewünschten Frequenz umgesetzt und dann einem dreiphasigen Asynchronmotor zugeführt.

Abhängig von der Belastung dieses Motors wird das Ansteuerungsmuster der Thyristoren des Wechselrichters bei Vorliegen bestimmter Bedingungen geändert. Dabei wird bei einem vorgegebenen Anstieg der Spannung am Motor diese Spannung durch den Strom im Zwischenkreis gesteuert, und das Drehmoment des Motors wird gesteuert durch den Zündwinkel der Thyristoren im Wechselrichter. Die Form des Stromes im Zwischenkreis wird nicht beeinflusst, sondern dazu dient die Glättungsdrossel.

Die genannten Schriften beziehen sich also auf Spezialprobleme von Drehstrom-Asynchronmotoren.

Aus der EP 1 767 434 A2 kennt man ein Fahrzeug mit einer Servolenkung. Diese hat einen dreiphasigen kollektorlosen Motor, der über einen Dreiphasen-Wechselrichter gespeist wird, welcher seinerseits von einem Mikrocomputer gesteuert wird. Dabei ergibt sich ein ungleichmäßiges Drehmoment, das Vibrationen im Lenkrad verursacht, und diese sind bei den Kunden nicht beliebt. Deshalb wird für jede Phase des Motors ein Strom-Sollwert berechnet, und die Strangströme werden entsprechend geregelt. - Der Dreiphasen-Wechselrichter erhält seinen Strom aus der Batterie des mit der Servolenkung gesteuerten Fahrzeugs.

Aus der EP 1 347 567 A1 kennt man einen dreiphasigen Motor, der über einen Wechselrichter aus einer Batterie gespeist wird. Der Strom von der Batterie zum Wechselrichter wird über einen Messwiderstand gemessen, und der Messwert wird einem Controller zugeführt, der den Wechselrichter steuert. Dazu dienen verbesserte Algorithmen.

Ferner kennt man aus der WO 2006/037966 A1 einen dreiphasigen Motor, der über einen Wechselrichter aus einer Batterie mit Strom versorgt wird. Zwischen der Batterie und dem Wechselrichter liegt ein Messwiderstand, und das Signal an diesem Widerstand wird einem Controller zugeführt, der den Wechselrichter steuert.

Es ist daher eine Aufgabe der Erfindung, einen neuen elektronisch kommutierten Motor bereit zu stellen.

Diese Aufgabe wird gelöst durch einen Elektromotor gemäß Anspruch 1. Ein solcher Elektromotor verringert die Schwankungen des von der Endstufe im Mittel aufgenommenen Stroms. Dies wirkt sich positiv auf die leitungsgebundene Störausstrahlung aus. Durch den Stromregler treten weniger Stromspitzen auf, und hierdurch kann das Netzteil beim Kunden besser ausgenutzt werden.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen. Es zeigt:

Fig. 1    eine schematische Darstellung eines elektronisch kommutierten Motors,

Fig.    2 ein Bestromungsdiagramm für eine Sechs-Schritt-Kommutierung in Vorwärtsrichtung.

Fig. 3    ein Bestromungsdiagramm für eine Zwölf-Schritt-Kommutierung in Vorwärtsrichtung,

Fig. 4    eine Darstellung des durch die Wicklungsanordnung und Endstufe fließenden Stroms,

Fig. 5    ein Bestromungsdiagramm für eine Zwölf-Schritt-Kommutierung in Rückwärtsrichtung,

Fig. 6    ein Messdiagramm für den Strom an einem Strommessglied,

Fig. 7    eine idealisierte Darstellung des Stroms aus Fig. 6,

Fig. 8    ein Regler-Diagramm für einen Kaskadenregler,

Fig. 9    ein Messdiagramm des Eingangsstroms eines Lüfters mit Eingangsstrommittelwertregelung,

Fig. 10    ein Messdiagramm der leitungsgebundenen Störausstrahlung für den Lüfter aus Fig. 9,

Fig. 11    ein Messdiagramm des Eingangsstroms eines Lüfters ohne Eingangsstrommittelwertregelung,

Fig. 12    ein Messdiagramm des Eingangsstroms eines Lüfters mit Eingangsstrommittelwertregelung bei höherer Leistung,

Fig. 13    ein Messdiagramm der leitungsgebundenen Störausstrahlung für den Lüfter aus Fig. 12,

Fig. 14    ein Messdiagramm des Eingangsstroms eines Lüfters ohne Eingangsstrommittelwertregelung bei höherer Leistung,

Fig. 15    ein Messdiagramm der leitungsgebundenen Störausstrahlung für den Lüfter aus Fig. 14,

Fig. 16    eine schematische Darstellung der in einem Mikroprozessor ablaufenden Routinen,

Fig. 17    eine Messanordnung für die induzierte Spannung bei einer sensorlosen Kommutierung,

Fig. 18    eine Darstellung einer PWM-Signal-Erzeugung mit zentral angeordnetem Impuls,

Fig. 19    ein Ablaufdiagramm der gesamten Steuerung des elektronisch kommutierten Motors,

Fig. 20    ein Flussdiagramm für ein Hauptprogramm main,

Fig. 21    ein Flussdiagramm für eine Interrupt-Routine Low_ISR,

Fig. 22    ein Flussdiagramm für eine Interrupt-Routine High_ISR,

Fig. 23    eine Messung des Eingangsstroms und der Spannung an einem Strommessglied,

Fig. 24    einen Pi-Filter zur Reduzierung der leitungsgebundenen Störausstrahlung, und

Fig. 25    ein Bestromungsdiagramm für eine Zwölf-Schritt-Kommutierung mit rampenförmiger Abschaltung der Endstufe.

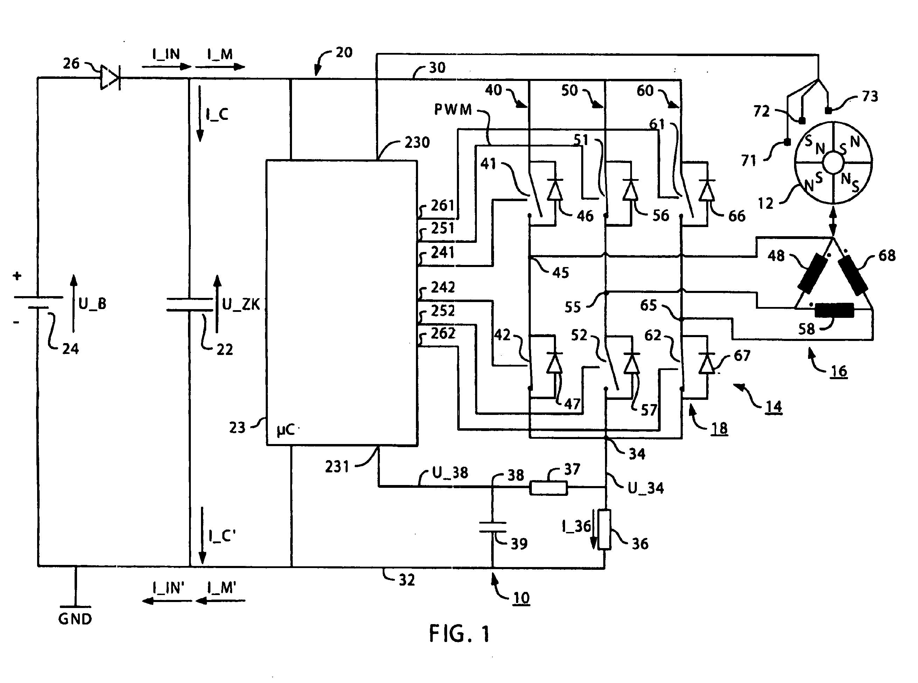

**Fig. 1** zeigt einen Elektromotor 10 mit einem Rotor 12 und einem Stator 14, welcher eine Wicklungsanordnung 16 mit drei Strängen 48, 58, 68 und eine Endstufe 18 aufweist. Die Endstufe 18 ist an einen Gleichstromzwischenkreis 20 mit einem Zwischenkreiskondensator 22 über eine obere Leitung 30 und eine untere Leitung 32 (GND) angeschlossen.

An dem Zwischenkreiskondensator 22 liegt eine Zwischenkreisspannung U_ZK an, und er ist mit einer Gleichspannungsquelle 24 mit einer Spannung U_B über eine optionale Verpolschutzdiode 26 verbunden.

Ein Mikroprozessor oder Mikrocontroller, im Folgenden Mikrocontroller µC 23 genannt, ist ebenfalls am Gleichstromzwischenkreis 20 angeschlossen und dient zur Steuerung des Motors 10.

Die Endstufe 18 dient zur Bestromung der Wicklungsanordnung 16 und hat drei Brückenzweige 40, 50, 60 mit drei oberen Schaltern 41, 51, 61, welche die obere Leitung 30 mit drei Anschlusspunkten 45, 55, 65 für die Wicklungsanordnung 16 verbinden, und mit drei unteren Schaltern 42, 52, 62, welche die drei Anschlusspunkte 45, 55, 65 mit einem gemeinsamen Fußpunkt 34 verbinden, der wiederum über einen Strommesswiderstand 36 mit der unteren Leitung 32 (GND) verbunden ist. Die oberen und unteren Schalter sind z.B. n-Kanal-MOSFETs vom Typ IRFR371 OZ von der Fa. International Rectifier.

Die Schalter 41, 51, 61, 42, 52, 62 sind N-Kanal-MOSFETS, und ihnen sind jeweils Freilaufdioden 46, 56, 66, 47, 57, 67 zugeordnet, um einen ggf. auftretenden Stromfluss entgegen der normalen Stromrichtung zu ermöglichen.

Die Anschusspunkte 45, 55, 65 sind mit der Wicklungsanordnung 16 verbunden, die als Dreieckschaltung geschaltet ist, wobei auch andere Konfigurationen wie Sternschaltungen möglich sind.

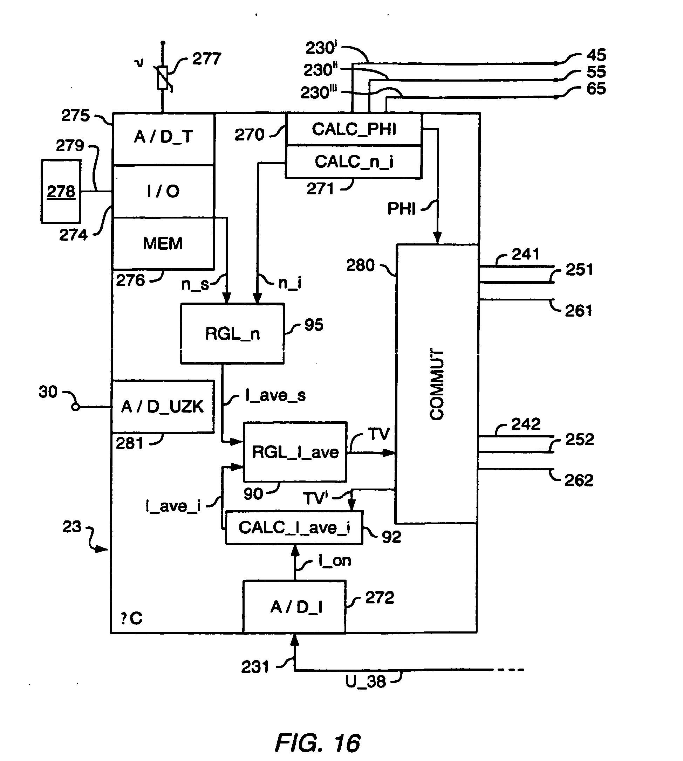

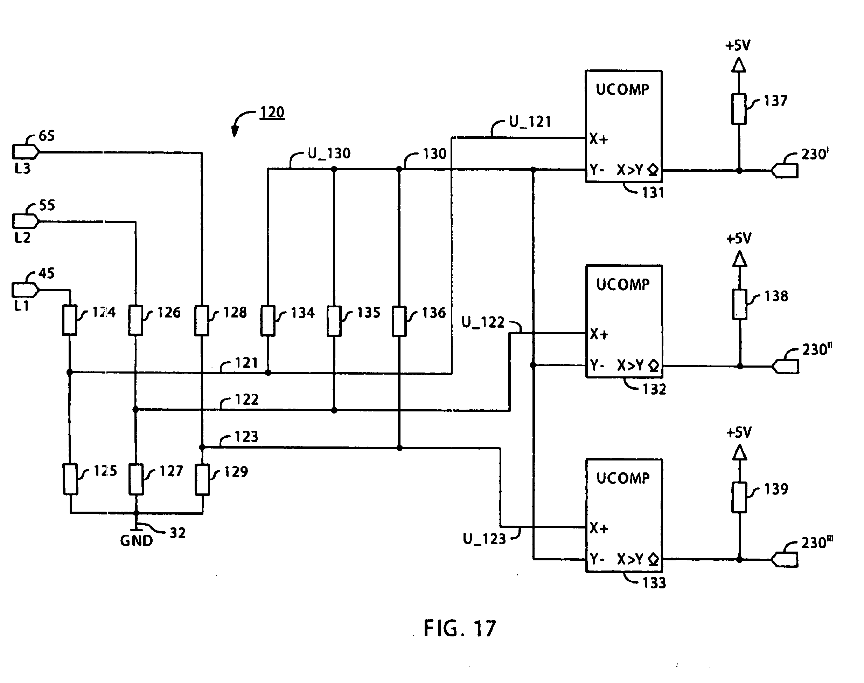

Der mit der Wicklungsanordnung 16 in Wechselwirkung stehende Rotor 12 ist vierpolig ausgebildet (es sind auch andere Polzahlen möglich), und ihm sind drei Drehstellungssensoren (z. B. Hall-Elemente) 71, 72, 73 zugeordnet, deren Ausgangssignale den Eingängen 230 des µC 23 zur Bestimmung der Drehstellung des Rotors 12 zugeführt werden. Alternativ ist auch eine sensorlose Kommutierung möglich, wie dies in Fig. 16 und Fig. 17 beschrieben ist.

Ein Widerstand 37 ist mit dem Fußpunkt 34 und einem Punkt 38 verbunden, welcher wiederum über einen Kondensator 39 mit der unteren Leitung 32 und zusätzlich mit dem Eingang 231 des µC 23 verbunden ist. Das RC-Glied 37, 39 ist als Tiefpass geschaltet und filtert Störungen aus.

Der µC 23 ist über einen Ausgang 241 mit dem Schalter 41 verbunden, über einen Ausgang 251 mit dem Schalter 51 über einen Ausgang 261 mit dem Schalter 61, über einen Ausgang 242 mit dem Schalter 42, über einen Ausgang 252 mit dem Schalter 52 und über einen Ausgang 262 mit dem Schalter 62. Der µC 23 kann somit die Kommutierung der Endstufe 18 steuern.

**Kommutierung**

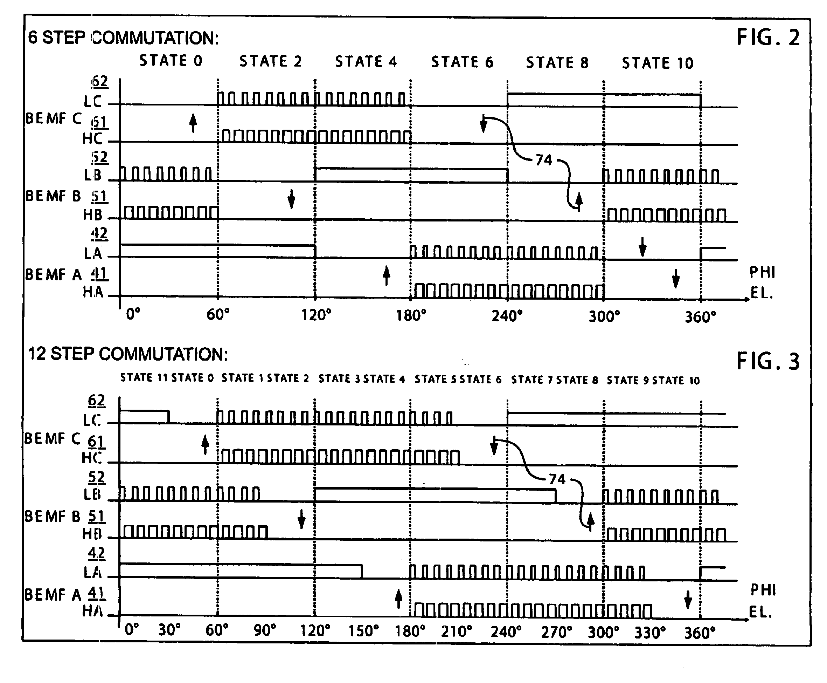

**Fig. 2** zeigt eine Möglichkeit zur Kommutierung der Endstufe 18 mit einer so genannten Sechs-Schritt-Kommutierung.

Das Diagramm zeigt die Ansteuerung der Schalter 41, 42, 51, 52, 61, 62 über eine elektrische Umdrehung (360 °el), d.h. über einen vollständigen Kommutierungszyklus. Bei einem vierpoligen Motor fängt die elektrische Periode nach einer halben mechanischen Umdrehung (180 °mech.) erneut an, da diese beiden Rotorstellungen magnetisch gleichwertig sind bzw. nicht unterschieden werden können. In dem Winkelbereich von 0 °el. bis 60 °el. ist der untere Schalter 42 immer geschlossen, und der obere Schalter 51 wird mit einem getaktetem Signal PWM mit vorgegebenen Tastverhältnis TV (englisch: duty cycle) angesteuert, um einen Strom durch den Strang 48 zu erzeugen. Ein getaktetes Signal ist ein Signal, das zwischen mindestens zwei Zuständen wie z.B. HIGH und LOW hin- und herwechselt. Der untere Schalter 52 wird mit dem inversen Signal /PWM des Schalters 51 angesteuert, damit dann, wenn der obere Schalter 51 ausgeschaltet ist, ein Stromkreisen über den Punkt 55, den Strang 48, den Punkt 45, den Schalter 42 und den Schalter 52 zurück zum Punkt 55 möglich wird, da ansonsten der Strom über die Freilaufdiode 57 fließen würde, was zu höheren Verlusten führen würde. Man spricht von aktivem Stromkreisen, wenn der entsprechende untere Schalter mit dem inversen Signal /PWM angesteuert wird, und von passivem Stromkreisen, wenn das Stromkreisen über die Freilaufdiode erfolgt.

Nach 60 °el. wird die Stromzufuhr über den Schalter 51 beendet, und das getaktete Signal mit vorgegebenem Tastverhältnis TV wird an dem Schalter 61 angelegt. Entsprechend wird an dem unteren Schalter 62 das inverse getaktete Signal /PWM des Schalters 61 angelegt. Nach 120 °el. wird der untere Schalter 42 ausgeschaltet und stattdessen der untere Schalter 52 eingeschaltet, so dass der Strom nun über den Schalter 61, die Wicklungsanordnung 16 und den unteren Schalter 52 fließen kann. Die Kommutierung wird entsprechend dem Diagramm fortgesetzt, bis nach 360 °el. wieder der Ausgangszustand erreicht ist. Diese Art der Kommutierung wird wegen der sechs Kommutierungszustände State 0, 2, 4, 6, 8, 10 Sechs-Schritt-Kommutierung genannt.

**Fig. 3** zeigt eine vorteilhafte Möglichkeit zur Kommutierung der Endstufe 18, die so genannte Zwölf-Schritt-Kommutierung. Es sind wieder die Ansteuersignale für die Schalter 41, 42, 51, 52, 61 und 62 über einen Winkelbericht von 360 °el. dargestellt.

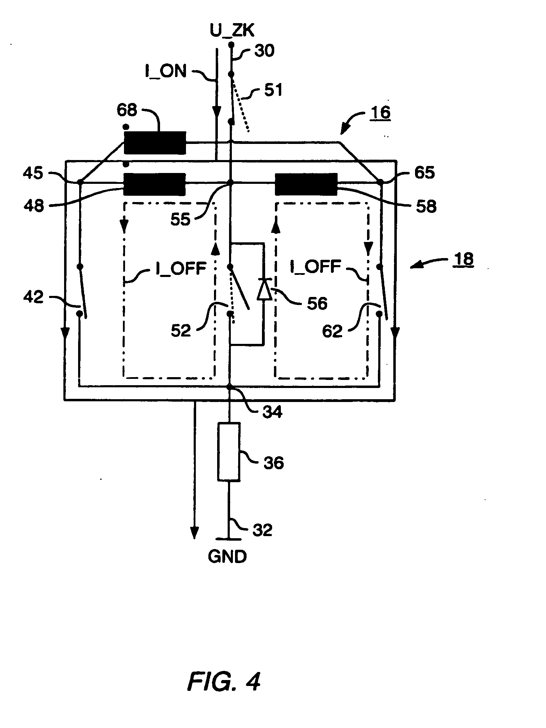

**Fig. 4** zeigt eine vereinfachte Darstellung der Wicklungsanordnung 16 und der Endstufe 18 für den Bereich 0 °el. bis 30 °el. gemäß Fig. 3.

Zwischen 0 °el. und 30 °el. sind sowohl der untere Schalter 42 als auch der untere Schalter 62 eingeschaltet, der obere Schalter 51 wird mit einem getakteten Signal PWM mit vorgegebenem Tastverhältnis TV angesteuert, und der untere Schalter 52 mit dem inversen Signal /PWM des Schalters 51. Bei dem Zustand "Schalter 51 ein und Schalter 52 aus" fließt ein Strom I_on von der oberen Leitung 30 über den Schalter 51 einerseits über den Strang 48, den Schalter 42 und den Messwiderstand 36 zur unteren Leitung 32 und andererseits über den Strang 58, den Schalter 62 und den Messwiderstand 36 zur unteren Leitung 32, wobei der entsprechende Stromfluss I_on und die entsprechenden Schalterstellungen durchgezogen dargestellt sind.

Wird der Schalter 51 jedoch durch das getaktete Signal PWM ausgeschaltet und der Schalter 52 durch das inverse getaktete Signal /PWM eingeschaltet, so kann zwar kein Strom mehr aus dem Gleichstromzwischenkreis 30, 32 fließen, auf Grund der Induktivität der Stränge 48, 58 fließt jedoch weiterhin ein Strom über diese, und es entstehen zwei Stromkreise I_off, wobei der eine über den Strang 48, den Schalter 42, den Schalter 52 zurück zum Strang 48 verläuft, und der andere über den Strang 58, den Schalter 62, den Schalter 52 zurück zum Strang 58. Die entsprechenden Stromflüsse I_off und die entsprechenden Schalterstellungen der Schalter 51 und 52 sind gestrichelt dargestellt. Bei einer Ansteuerung der Endstufe 18 mit passivem Stromkreisen bzw. bei einer notwendigen Verzögerung zwischen dem Ausschalten des oberen Schalters 51 und dem Einschalten des unteren Schalters 52 fließt der Strom I_off über die Freilaufdiode 56.

Nach 30 °el wird der untere Schalter 62 ausgeschaltet, so dass nur noch der untere Schalter 42 dauerhaft eingeschaltet ist. Dies bewirkt, dass der gesamte Strom **I_on** über den Strang 48 und den unteren Schalter 42 fließen muss, über den bis dahin nur etwa die Hälfte des Stroms I_on geflossen ist. Da der Strom in einem Strang wegen dessen Induktivität nicht sofort erhöht werden kann, entsteht immer dann, wenn ein Wechsel der Bestromung der Stränge der Endstufe 16 stattfindet, eine Stromlücke, die zu einer Schwankung des Eingangsstroms I_in führt. Da bei der Zwölf-Schritt-Kommutierung gemäß Fig. 3 beim Umschalten immer bereits die Hälfte des Gesamtstroms durch einen anderen Strang fließt, ist die Stromlücke kleiner als bei einer Sechs-Schritt-Kommutierung, bei der vor der Kommutierung der Strom immer vollständig durch einen ersten Strang fließt und nach der Kommutierung vollständig durch einen zweiten Strang, so dass der Strom durch den ersten Strang von der vollen Stromhöhe bis auf Null abgebaut werden muss.

Nach 60 °el. wird zusätzlich zum oberen Schalter 51 der obere Schalter 61 mit dem getakteten Signal PWM angesteuert, und sowohl der untere Schalter 52 als auch der untere Schalter 62 werden mit dem inversen getakteten Signal /PWM angesteuert.

Nach 90 °el. wird dann der obere Schalter 51 komplett ausgeschaltet, so dass nur noch der obere Schalter 61 mit dem getakteten Signal PWM angesteuert wird. Entsprechend dem Diagramm wird die Kommutierung anschließend fortgeführt. Anders als in Fig. 2 wird also sowohl bei den unteren Schaltern als auch bei den oberen Schaltern bei der Kommutierung jeweils ein überlappender Bereich vorgesehen bzw. ein zweiter oberer bzw. unterer Schalter wird eingeschaltet, bevor ein erster oberer bzw. unterer Schalter ausgeschaltet wird. Da insgesamt 12 Kommutierungsschritte durchgeführt werden und es die zwölf Zustände State 0 bis 11 gibt, spricht man von einer Zwölf-Schritt-Kommutierung. Diejenigen Zustände, die bei der Sechs-Schritt-Kommutierung gemäß Fig. 2 und bei der Zwölf-Schritt-Kommutierung gemäß Fig. 3 gleich sind, wurden mit den gleichen geraden Zuständen State 0, 2, 4, 6, 8, 10 bezeichnet, Diejenigen Zustände, die nur in der Zwölf-Schritt-Kommutierung gemäß Fig. 3 vorkommen, wurden mit den ungeraden Zuständen State 1, 3, 5, 7, 9 und 11 bezeichnet.

Der Start des Motors 10 mit einer Zwölf-Schritt-Kommutierung ist schwierig bzw. bei manchen Motortypen unmöglich, und daher wird bevorzugt ein Start mit Sechs-Schritt-Kommutierung durchgeführt und nach dem Anlauf bzw. nach dem Erreichen einer vorgegebenen Mindestdrehzahl auf die Zwölf-Schritt-Kommutierung umgestellt.

Eine Zwölf-Schritt-Kommutierung bzw. eine Kommutierung mit überlappendem Ein- und Ausschalten der Transistoren ist bei einem einsträngigen Motor nicht möglich, und dieser hat daher prinzipbedingt bei der Kommutierung immer eine im Vergleich zum dreisträngigen Motor große Stromlücke.

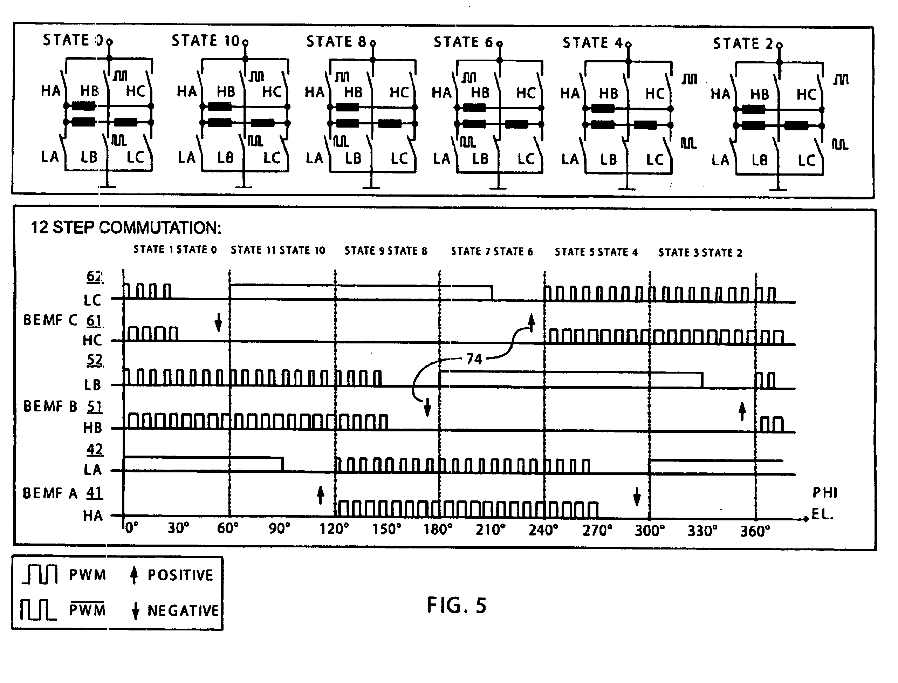

**Fig. 5** zeigt ebenfalls ein Diagramm für eine Zwölf-Schritt-Kommutierung, jedoch für die umgekehrte Drehrichtung. Oben ist für die geraden Zustände State 0, 2, 4, 6, 8, 10 ein schematisches Schaltbild der Endstufe 16 mit den Schalterstellungen dargestellt. Die Stränge der Endstufe werden mit A, B, C gekennzeichnet, und die oberen Schalter mit H (HIGH) und die unteren Schalter mit L (LOW). Damit ist HA = 41, HB = 51, HC = 61, LA = 42, LB = 52, LC = 62. Diese Bezeichnungen werden im Folgenden gleichbedeutend verwendet.

## Strommessung

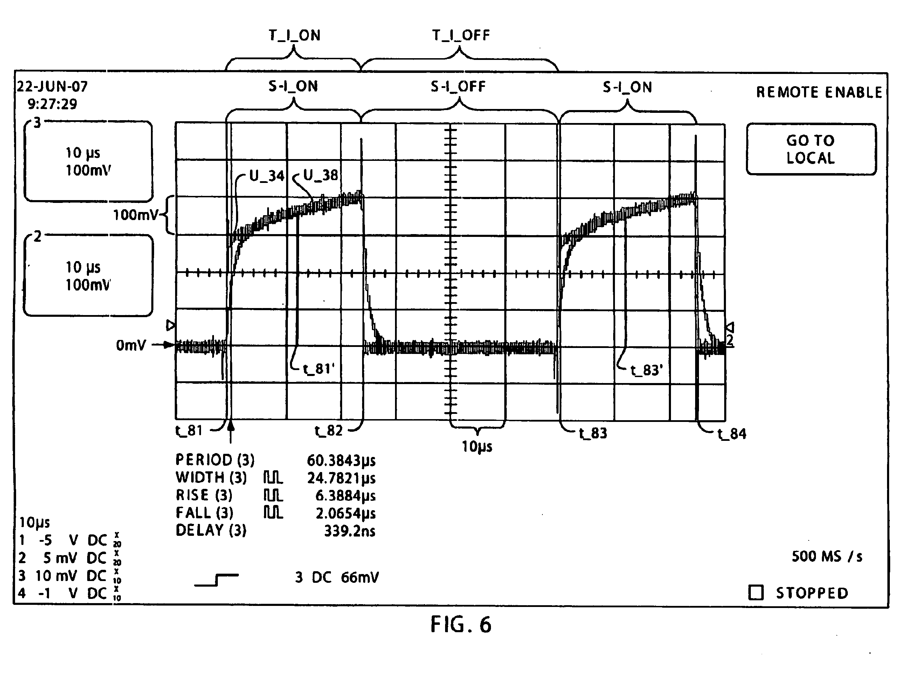

**Fig. 6** zeigt ein Messdiagramm der Spannung U_34 am Fußpunkt 34 und der Spannung U_38 am Punkt 38 (Fig. 1), gemessen bei einer Bestromung gemäß Fig. 3 im Bereich 0 °el. bis 30 °el. Die Skalierung ist wie auch bei den übrigen Messdiagrammen am Rand eingezeichnet.

Während der Zeitdauer T_I_on zwischen den Zeitpunkten t_81 und t_82 ist der obere Schalter 51 eingeschaltet, und die unteren Schalter 42 und 62 sind wie in dem gesamten Drehwinkelbereich zwischen 0 °el. und 30 °el. ebenfalls eingeschaltet (Zustand S-I_on). Es fließt ein Strom I_on gemäß Fig. 4 von der oberen Leitung 30 über den oberen Schalter 51, die Wicklungsanordnung 16 und die unteren Schalter 42 und 62 zum Fußpunkt 34 und von dort über den Strommesswiderstand 36 zur unteren Leitung 32. Der Strom I_on bewirkt eine entsprechende Spannung U_34 am Messwiderstand 36, die in Form der Spannungen U_34 bzw. U_38 ausgewertet werden kann.

Zum Zeitpunkt t_82 werden der obere Schalter 51 ausgeschaltet und der untere Schalter 52 eingeschaltet (Zustand S-I_off), und hierdurch entsteht während der Zeitdauer T_I_off ein Stromkreisen innerhalb der Endstufe 18 mit den Strömen I_off gemäß Fig. 4, welches weiterhin den Motor antreibt. Es fließt aber kein Strom I_M mehr zwischen der oberen Leitung 30, der Endstufe 18, den Messwiderstand 36 und der unteren Leitung 31, und entsprechend fallen die Spannungen U_34 und damit auch U_38 auf 0 V.

Zum Zeitpunkt t_83 wird der obere Schalter 51 wieder eingeschaltet, und die Spannungen U_34 und U_38 steigen wegen des ansteigenden Stroms I_on wieder an.

Zum Zeitpunkt t_81 ist zu sehen, dass die Spannung U_34 Spitzen hat, die insbesondere durch den Schaltvorgang entstehen. Das RC-Glied 37, 39 aus Fig. 1 filtert diese Störspitzen aus, und das resultierende Signal U_38 kann einfacher ausgewertet werden als das Signal U_34 am Fußpunkt 34. Beide Signale U_34 und U_38 bilden den aktuellen Strom I_M durch die Leitung 30 bzw. 32 ab, und sie steigen mit steigendem Strom I_M und fallen mit fallendem Strom I_M.

Der Strom durch eine Induktivität L mit einem Widerstand R steigt bei einer vorgegebenen Spannung U über die Zeit t gemäß

$$I = U/R \, (1-e^{-Rt/L}) \qquad\qquad ...(1)$$

an und nähert sich so dem Wert U/R. Nach dem Abschalten der Spannungsquelle in einem Kreis mit einem Widerstand R fällt er, ausaehend von einem Strom $I_0$, gemäß

$$I = I_0 \, e^{-t \, R/L} \qquad\qquad ...(2)$$

wieder ab.

Wie beim Signal U_34 zu sehen ist, steigt der Strom durch die Wicklungsanordnung 16 während des Zustands S-I_on ab dem Zeitpunkt t_81 an, und während des Zustands S- I_off ab dem Zeitpunkt t_82, in dem der Strom durch die Wicklungsanordnung 16 nicht am Messwiderstand 36 abgebildet wird, fällt der Strom wieder etwas ab, so dass er zum Zeitpunkt t_83 kleiner als zum Zeitpunkt t_82 ist.

**Strommessung - Näherung**

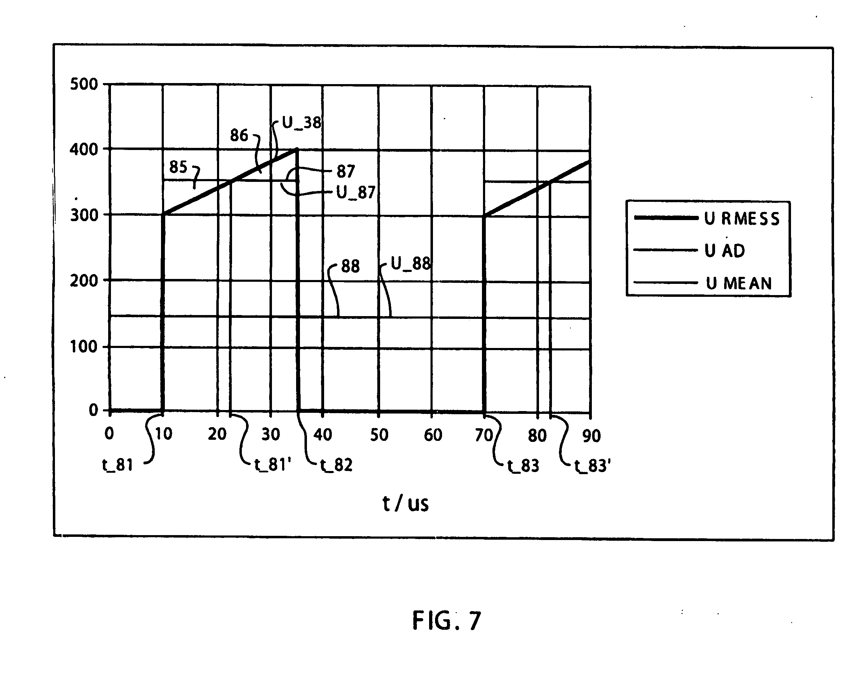

**Fig. 7** zeigt eine schematische Darstellung der Spannung U_38 in idealisierter Form. Die Spannung U_34 bzw. U_38 steigt aufgrund der Induktivität der Wicklungsanordnung 16 gemäß Gleichung (1) an, wobei der Anstieg bei genügend kleinen Einschaltzeiten T_I_on zwischen t_81 und t_82 bzw. t_83 und t_84 näherungsweise als linear angesehen werden kann.

Der Mittelwert 87 der Spannungen U_34 bzw. U_38 zwischen den Zeitpunkten t_81 und t_82 kann näherungsweise dadurch ermittelt werden, dass zu einem Zeitpunkt t_81', der in der Mitte zwischen den Zeitpunkten t_81 und t_82 liegt, die Spannung U_34 bzw. U_38 gemessen wird. Bei einem näherungsweise linearen Verlauf der Spannungen U_34 bzw. U_38 erhält man durch diese Messung den Mittelwert 87 der Spannung U_38 zwischen den Zeitpunkten t_81 und t_82. Dies ist graphisch herleitbar, denn die Fläche des Dreiecks 85 entspricht der Fläche des Dreiecks 86.

Es gilt allgemein

$$I\_36 = U\_34 \, / \, R\_36 \qquad\qquad ...(3)$$

bzw.

$$I\_36 = U\_38 \, / R\_36 \qquad\qquad ...(4)$$

mit dem ohmschen Widerstand R_36 des Widerstands 36, der z.B. 0,15 Ohm beträgt. Auf Grund der Proportionalität zwischen dem Strom I_36 bzw. I_M und der Spannung U_34 bzw. U_38 charakterisiert ein Mittelwert der Spannung U_34 bzw. U_38 auch entsprechend den Mittelwert des Stroms I_36 bzw. I_M, und im Folgenden wird ein Verfahren beschrieben, um den Mittelwert 88 der Spannung U_34 bzw. U_38 zu ermitteln.

Die gemittelte Spannung U_87 zwischen den Zeitpunkten t_81 und t_82 ergibt sich zu

$$U\_87 = U\_38(t\_81'), \qquad\qquad ...(5)$$

wobei U_38(t_81') die Spannung U_38 zum Zeitpunkt t_81' ist, und die Spannung U_87 beträgt z.B. in Fig. 6 U_87 = 370 mV. Der entsprechende Strom I_on_ave beträgt

$$I\_on\_ave = U\_87 / R\_36 = 370 \text{ mV} / 0{,}15 \, \Omega = 2{,}47 \text{ A} \qquad ...(6)$$

Der so ermittelte mittlere Strom I_on_ave fließt näherungsweise auch während des Stromkreises in der Endstufe 16, und er könnte daher z.B. zur Bestimmung des zum Strom durch die Wicklungsanordnung 16 proportionalen Drehmoments und auch zur Bestimmung der in der Endstufe erzeugten Verlustleistung verwendet werden.

Der Stromwert I_on-ave entspricht jedoch nicht dem insgesamt während einer Periode (z.B. t_81 bis t_83) des getakteten Signals aus dem Gleichstromzwischenkreis 20 entnommenen Strom, da zwischen den Zeitpunkten t_82 und t_83 dem Gleichstromzwischenkreis 20 kein Strom entnommen wird.

Die mittlere Spannung U_88 über die gesamte Periode t_81 bis t_83 der Spannung U_38 ergibt sich durch Multiplikation des Werts I_on_ave mit dem Tastverhältnis TV des getakteten Signals U_38 bzw. PWM zu

$$U\_88 = U\_87 * TV = U\_38(t\_81') * TV, \qquad\qquad ...(7)$$

und der mittlere, durch den Gleichstromzwischenkreis fließende Strom I_ave ergibt sich zu

$$I\_ave = U\_87 * TV / R\_36 = I\_ave\_on * TV \qquad\qquad ...(8)$$

Das Tastverhältnis TV eines getakteten Signals ist allgemein

$$TV = T\_on / (T\_on + T\_off), \qquad\qquad ...(9)$$

wobei T_on die Zeitdauer des Pulses I_on während einer Periode des getakteten Signals ist.

Das Tastverhältnis TV eines PWM-Signals mit einer Periodendauer T_PWM = T_on + T_off und variabler Impulsdauer T_on_PWM beträgt

$$TV = T\_on\_PWM / T\_PWM. \qquad\qquad ...(10)$$

Es können PWM-Signale mit konstanter oder variabler Periodendauer T_PWM verwendet werden. Bei den PWM-Signalen in Fig. 2 bis Fig. 5 und Fig. 25 wird eine konstante Periodendauer T_PWM verwendet.

Der Strommittelwert I_ave für den durch den Gleichstromzwischenkreis 20 fließenden Strom I_M und damit auch die Spannung U_88 können also bei gleichem Strommittelwert I_on_ave bzw. Spannungsmittelwert U_87 zwischen den Zeitpunkten t_81 und t_82 und damit bei gleichem Drehmoment des Motors 10 in Abhängigkeit vom Tastverhältnis TV vollkommen verschieden sein.

Versuchsweise wurde eine Mittelwertbildung mittels eines analogen RC-Tiefpasses durchgeführt. Um das getaktete Spannungssignal U_34 mit dem RC-Tiefpass zu glätten, muss die Zeitkonstante tau = R* C sehr groß sein. Dies hat jedoch zur Folge, dass keine gute Regelung des Eingangsstroms I_M, I_IN mehr möglich ist. Dies kann damit erklärt werden, dass durch die große Zeitkonstante des RC-Tiefpasses die Vergangenheit des Spannungssignals U_34 regelungstechnisch eine zu große Rolle spielt.

Im Gegensatz zur Lösung mit einer Mittelwertbildung mit einem RC-Tiefpass wird hier wird der Mittelwert U_88 der Spannung U_38 für jede PWM-Periode bzw. allgemein für einen vorgegebenen Zeitraum oder eine Periode des getakteten Signals ermittelt, und er steht sogar vor Beginn der folgenden PWM-Periode fest und kann daher für eine gute und schnelle Regelung verwendet werden. Es ist auch eine Ermittlung eines den Mittelwert des Eingangsstroms charakterisierenden Werts über mehrere Perioden möglich, z.B. über zwei, drei oder vier PWM-Perioden, und es kann z.B. jeweils eine unterschiedlich Gewichtung erfolgen, wonach der Mittelwert der aktuell gemessenen PWM-Periode mit 70 % und der Mittelwert der vorhergehenden PWM-Periode mit 30 % eingeht. Alternativ kann diese Berücksichtigung auch im Regler erfolgen.

Die Ermittlung des den Mittelwert des Eingangsstroms $I\_IN$, $I\_M$ charakterisierenden Werts $U\_88$ könnte auch über eine häufige A/D-Wandlung des Signals $U\_38$ in kurzen zeitlichen Abständen (mit einer hohen Abtastfrequenz) in Kombination mit einer anschließenden Mittelung der Messwerte erfolgen. Dies setzt jedoch einen extrem schnellen A/D-Wandler voraus, und solche sind üblicherweise teuer.

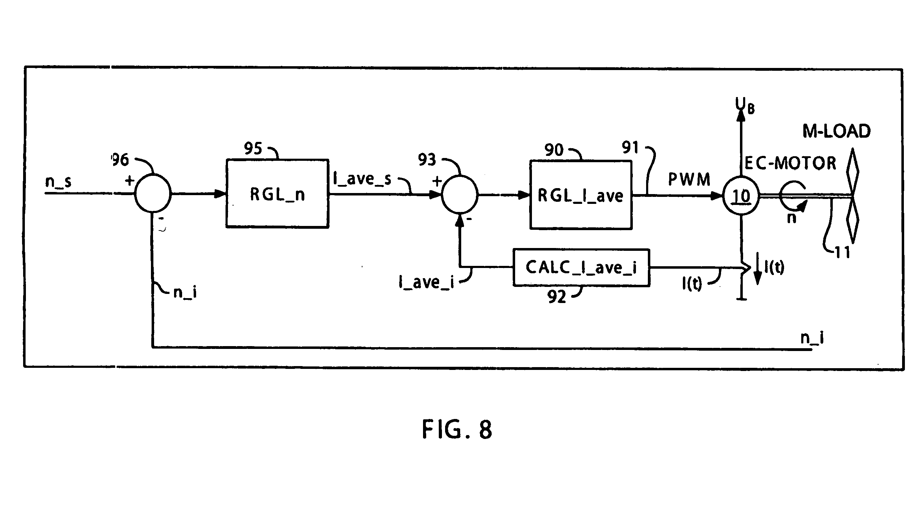

**Fig. 8** zeigt ein Regler-Diagramm mit einem Strommittelwert-Regler $RGL\_I\_ave$ 90, der über eine Leitung 91 ein getaktetes PWM-Signal an den Motor 10 bzw. dessen Endstufe als Stellwert ausgibt. Der Motor 10 treibt bspw. eine Last 11 in Form eines Lüfterrads an. In Abhängigkeit von dem über die Leitung 91 übertragenen getakteten Signal entnimmt der Motor 10 einer Spannungsquelle $U\_B$ einen Strom $I(t)$, und dieser wird gemessen und einer Strommittelwert-Ermittlungsvorrichtung $CALC\_I\_ave\_i$ 92 zugeführt, die aus dem Strom $I(t)$ einen Strommittelwert $I\_ave\_i$ ermittelt, insbesondere berechnet, der dem mittleren von der Spannungsquelle $U\_B$ zum Motor 10 fließenden Strom entspricht. Ein Regeldifferenzbilder 93 ist mit dem Strommittelwert-Regler 90 verbunden, und ihm werden der Strommittelwert $I\_ave\_i$ als Istwert und ein Strommittelwert $I\_ave\_s$ als Sollwert zugeführt. Dem Strommittelwert-Regler 90 ist ein Drehzahlregler $RGL\_n$ 95 überlagert, wobei der Stellwert des Drehzahlreglers 95 dem Regeldifferenzbilder 93 als Sollwert $I\_ave\_s$ zugeführt wird. Man spricht von einem Kaskadenregler. Dem Drehzahlregler 95 ist ebenfalls ein Regeldifferenzbilder 96 zugeordnet, dem zum einen ein Drehzahlsollwert $n\_s$ und zum anderen ein Drehzahl-Istwert $n\_i$ zugeführt werden, wobei letzterer bspw. durch eine Drehzahlermittlungsvorrichtung am Motor 10 ermittelt wird.

Eine Besonderheit des Strommittelwert-Reglers 90 besteht darin, dass eine Regelung auf den Mittelwert des in die Endstufe 18 hinein fließenden Stroms durchgeführt wird. Dieser Mittelwert kann sich in Abhängigkeit von dem getakteten Signal von dem in der Endstufe 18 fließenden Strom unterscheiden.

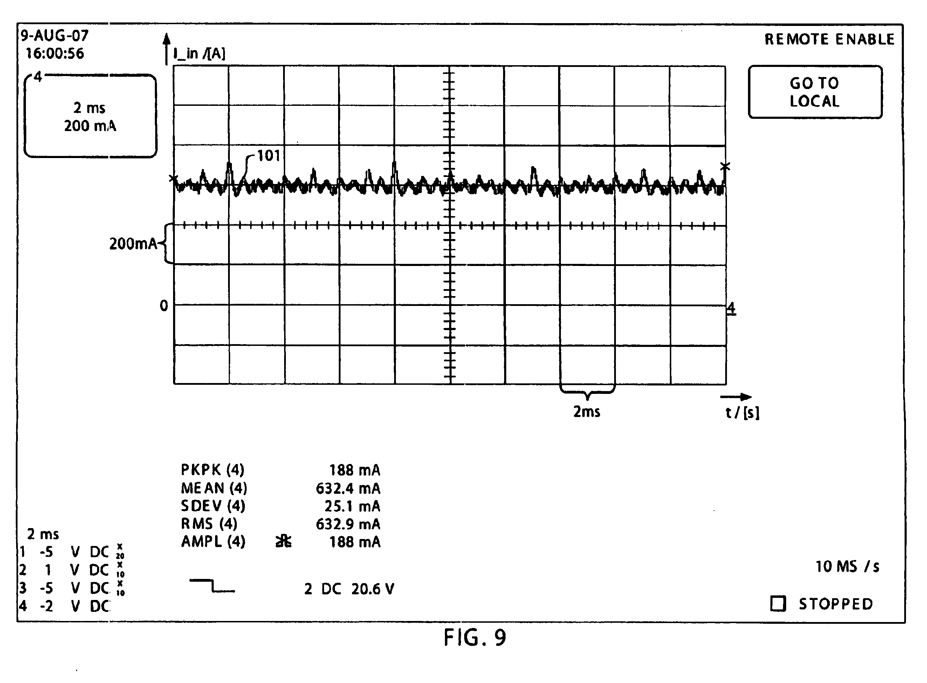

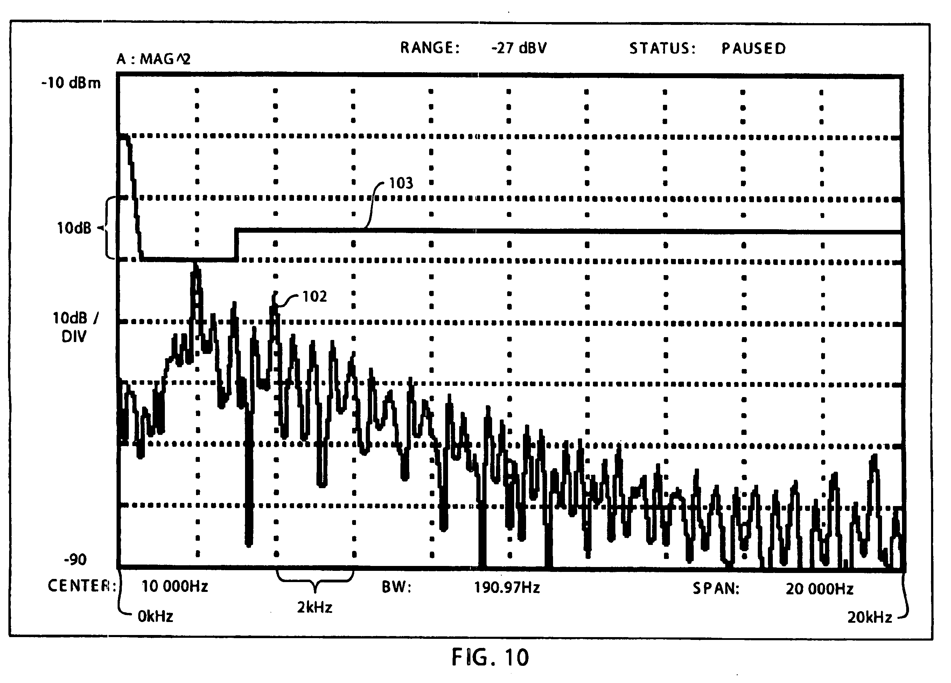

Eine weitere Besonderheit des Strommittelwert-Reglers 90 besteht darin, dass die Endstufe 18 des Motors 10 bzw. deren Schalter 41, 51, 61, 42, 52, 62 als Stellglied 18 für den Regler 90 zur Beeinflussung des Werts $I\_ave\_i$ und zur Angleichung des Werts $I\_ave\_i$ an den Wert $I\_ave\_s$ verwendet wird. Der Motor kann damit ohne ein zusätzliches Stellglied in der Zuleitung zur Endstufe des Motors 10 betrieben werden. **Fig. 9** zeigt ein Messdiagramm, in dem der Eingangsstrom $I\_in$ 101 (vgl. Fig. 1) über die Zeit t dargestellt ist. **Fig. 10** zeigt den Pegel 102 der entsprechenden leitungsgebundenen Störausstrahlung in dB sowie den Grenzwert 103 gemäß der Norm ETSI EN 300 132-2, im Folgenden ETSI-Grenzwert und ETSI-Norm genannt, jeweils wie auch bei den folgenden Messdiagrammen der leitungsgebundenen Störausstrahlung aufgetragen über einen Frequenzbereich von 25 Hz bis 20 kHz. Der Motor gemäß Fig. 9 und Fig. 10 arbeitet mit Strommittelwertregelung bei $U\_B = 48$ V, einer Leistungsaufnahme $P = 30$ W, einer Drehzahl $n = 5000$ min$^{-1}$ und frei blasend. Da sich die leitungsgebundene Störausstrahlung maßgeblich durch die Stromänderungen des Eingangsstroms ergibt, bewirkt die Strommittelwertregelung eine niedrige leitungsgebundenen Störausstrahlung 102, so dass diese bei einem Betrieb des Lüfters mit einer Leistung $P = 30$ W unterhalb des ETSI-Grenzwerts 103 liegt und damit die ETSI-Norm erfüllt. Der Eingangsstrom $I\_in$ 101 hat dabei einen Wechselanteil von deutlich unter 200 mA.

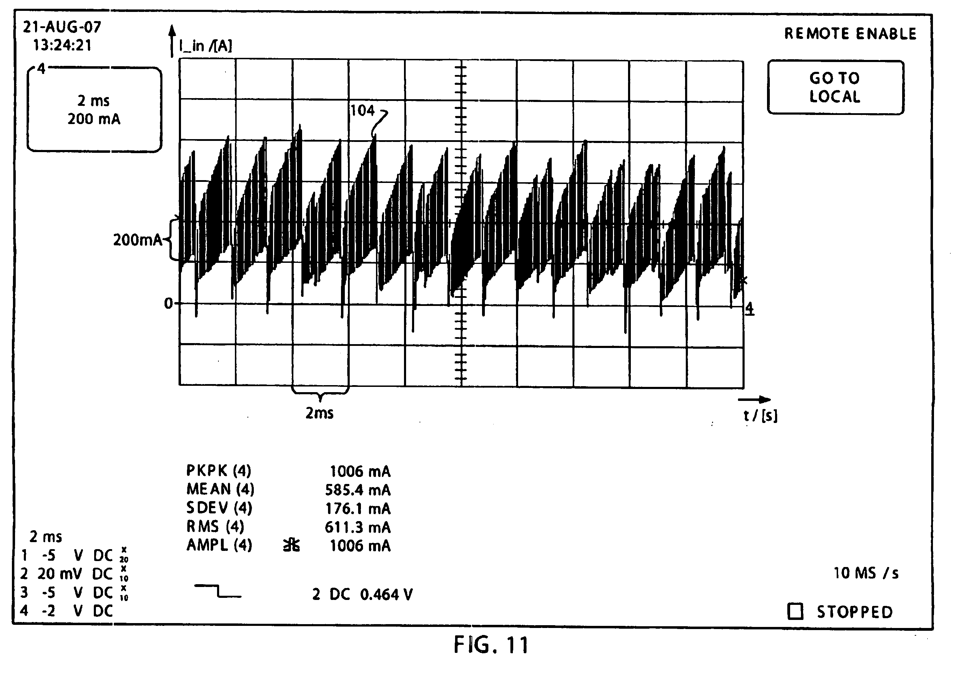

**Fig. 11** zeigt ein Messdiagramm mit dem Eingangsstrom $I\_IN$ 104 über die Zeit t für einen Lüfter ohne Strommittelwertregelung, der mit den folgenden Parametern betrieben wurde: $U\_B = 48$ V, $P = 30$ W, $n = 4000$ min$^{-1}$, frei blasend. Bei dieser Messung wurde der gleiche Lüfter wie in Fig. 9 und Fig. 10 verwendet, es wurde jedoch der Stellwert des Drehzahlreglers direkt in ein PWM-Tastverhältnis umgesetzt. Es ist deutlich zu sehen, dass dieser Lüfter bei gleicher Leistung einen deutlich höheren Wechselanteil des Eingangsstroms $I\_in$ 104 von etwa 1 A hat. Daraus ergibt sich auch eine deutlich höhere leitungsgebundene Störausstrahlung.

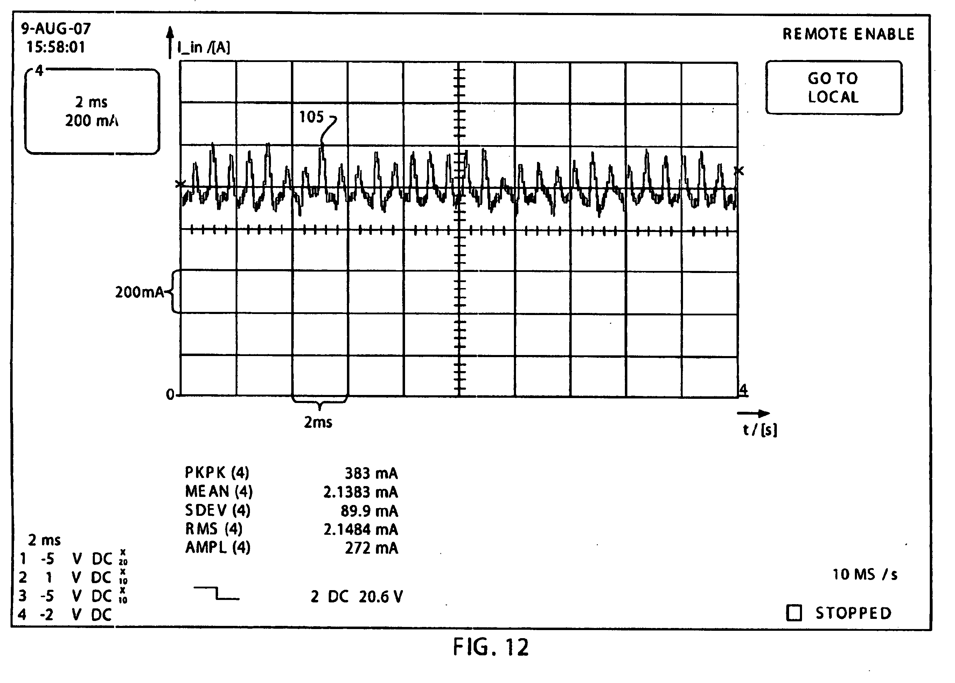

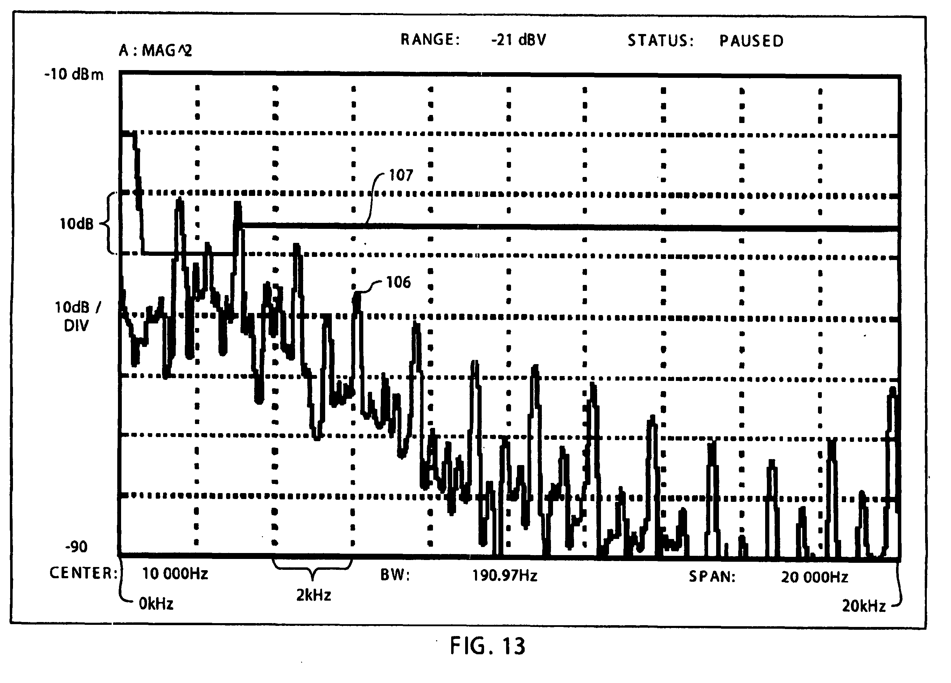

**Fig.12** zeigt ein Messdiagramm, in dem der Eingangsstrom $I\_in$ 105 über die Zeit t aufgetragen ist, und **Fig. 13** zeigt die entsprechende leitungsgebundene Störausstrahlung 106 und den ETSI-Grenzwert 107 in dB, aufgetragen über einen Frequenzbereich 25 Hz bis 20 kHz. Es handelt sich wieder um einen Lüfter mit Strommittelwert-Regelung, und dieser wurde mit den folgenden Parametern betrieben: $U\_B = 48$ V, $P = 100$ W, $n = 7700$ min$^{-1}$, Zwölf-Schritt-Kommutierung. Bei einer Leistung von 100 W ist die Welligkeit des Eingangsstroms $I\_in$ 105 erwartungsgemäß höher, die leitungsgebundene Störausstrahlung 106 befindet sich jedoch weitgehend unterhalb der Normkurve 107. Zur Erfüllung der ETSI-Norm sind somit ggf. weitere Schritte notwendig.

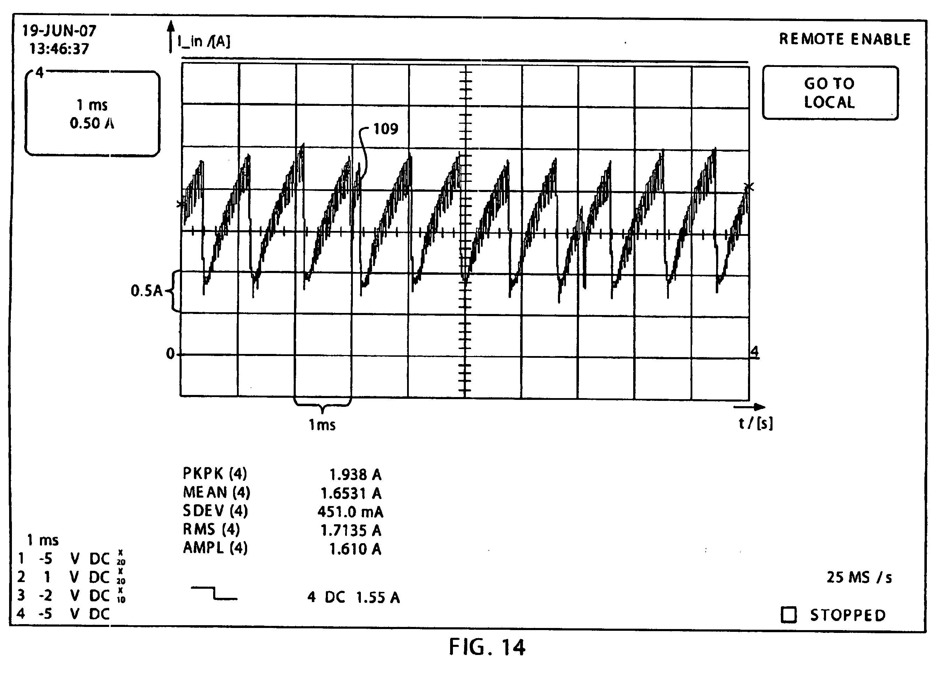

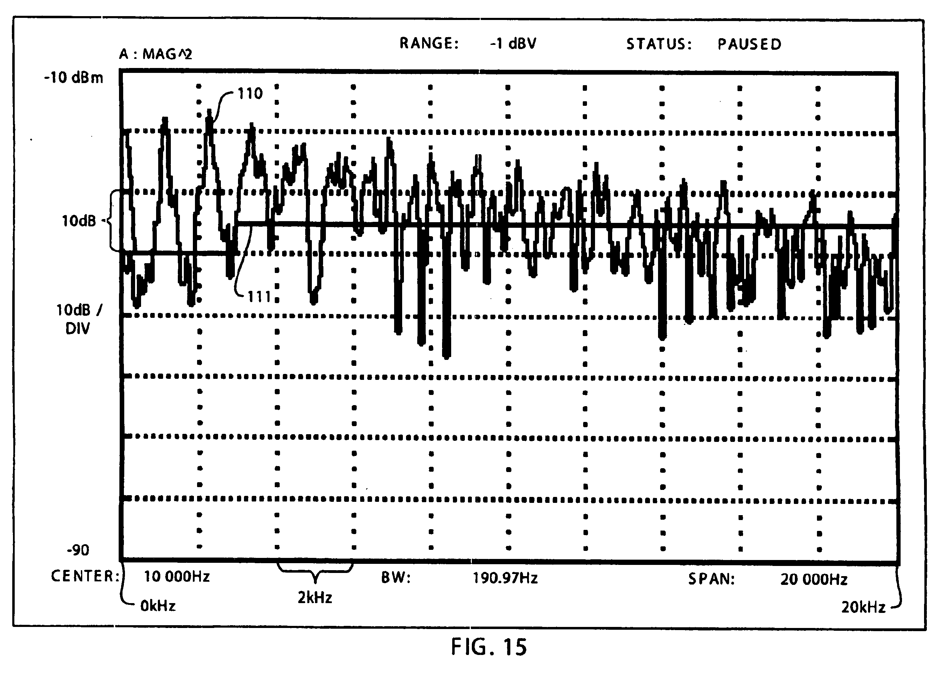

**Fig. 14** zeigt ein Messdiagramm, in dem der Eingangsstrom $I\_in$ 109 über die Zeit t aufgetragen ist, und **Fig. 15** zeigt die entsprechende leitungsgebundene Störausstrahlung 110 und den ETSI-Grenzwert 111 in dB, aufgetragen über einen Frequenzbereich von 25 Hz bis 20 kHz. Der Lüfter wurde bei dieser Messung ohne Strommittelwert-Regelung mit den folgenden Parametern betrieben: $U\_B = 48$ V, $P = 83$ W, $n = 5550$ min$^{-1}$, frei blasend. Der Mittelwert des Eingangsstroms 109 beträgt bei dieser Messung ca. 1,7 A, und der Spitze-Spitze-Wert beträgt 1,8 A. Der Eingangsstrom 109 hat damit sehr große Schwankungen, und dies führt zu einer hohen leitungsgebundenen Störausstrahlung 110, welche den ETSI-Grenzwert 111 deutlich überschreitet und die ETSI-Norm daher nicht erfüllt. Der Lüfter überschreitet den ETSI-Grenzwert 111 um bis zu 24 dB.

Anhand der dargestellten Messdiagramme wird deutlich, dass durch die Strommittelwert-Regelung eine deutliche Reduzierung der leitungsgebundenen Störausstrahlung erreicht werden kann.

**Fig.16** zeigt einen schematischen Aufbau des in dem µC 23 ablaufenden Programms mit einem Kaskadenregler 95, 90 gemäß Fig. 8.

Ein externes Gerät 278 wie z. B. ein Computer ist über eine Datenleitung 279 mit einer Eingabe-/ Ausgabeeinheit I/O 274 des µC 23 verbunden. Über den Computer 278 kann dem Lüfter z. B. eine Solldrehzahl n_s vorgegeben werden, und diese wird dann im Speicher MEM 276 gespeichert. Es kann auch eine Ausgabe von Informationen über den Motor 10 zum Computer erfolgen. Der Drehzahl-Sollwert n_s kann auch über einen NTC-Widerstand 277 und einen A/D-Wandler 275 in Kombination mit einer - nicht dargestellten -Temperatur/Drehzahl-Kennlinie bestimmt werden. Der Drehzahl-Sollwert n_s wird dem Drehzahlregler RGL_n 95 als Sollwert zugeführt.

In diesem Ausführungsbeispiel wird eine sensorlose Kommutierung durchgeführt, und die Eingänge 230', 230", 230''' sind über eine in Fig. 17 dargestellte Auswertevorrichtung 120 mit den Anschlusspunkten 45, 55, 65 der Wicklungsanordnung 16 verbunden, um über eine Auswertung der entsprechenden Nulldurchgänge der induzierten Spannung in der Routine CALC_PHI 270 die Drehstellung PHI des Rotors 12 und in der Routine CALC_n_i 271 die aktuelle Drehzahl n_i zu ermitteln, wobei diese anschließend dem Regler RGL_n 95 und der Routine COMMUT 280 zugeführt werden. Alternativ kann die Ermittlung der Drehstellung PHI und der Drehzahl n_i wie in Fig. 1 mit Hilfe der Drehstellungssensoren 71, 72, 73 erfolgen.

Die Drehzahl n_i wird dem Drehzahlregler 95 als Istwert zugeführt, und dieser ermittelt zur Regelung einen Stellwert I_ave_s.

Dem Strommittelwert-Regler RGL_I_ave 90 werden der Strommittelwert-Sollwert I_ave_s als Sollwert und ein Strommittelwert I_ave_i als Istwert zugeführt, und er errechnet daraus ein Tastverhältnis TV für die Kommutierungsanordnung COMMUT 280. Die den Strom I_M im Gleichstromzwischenkreis 20 charakterisierende Spannung U_38 wird über den Eingang 231 einer Routine A/D_I 272 zugeführt, die z. B. zu vorgegebenen Zeitpunkten eine A/D-Wandlung zur Erzeugung eines Stromwerts I_on durchführt. Der Routine CALC_I_ave_i 92 werden der Wert I_on und ein von der Routine COMMUT ausgegebenes Tastverhältnis TV', das üblicherweise dem Tastverhältnis TV entspricht, zugeführt, und die Routine CALC_I_ave 92 berechnet in Abhängigkeit von diesen Werten den aktuellen Strommittelwert I_ave_i, der dem Strommittelwert-Regler 90 als istwert zugeführt wird. Die Zuführung des Tastverhältnisses TV' ermöglicht die Berücksichtigung einer Änderung des Tastverhältnisses TV durch die Routine COMMUT 280.

Bei vielen Anwendungsfällen wie z.B. der überlagerten Drehzahlregelung ist der absolute Wert des Stroms I_on bzw. I_ave_i nicht erforderlich, und es kann dann direkt mit den Spannungswerten U_87 bzw. U_88 aus Fig. 7 gearbeitet werden.

Die Routine COMMUT 280 bestimmt in Abhängigkeit von der Drehstellung PHI und dem Tastverhältnis TV, welche Signale über die Ausgänge 241, 251, 261, 242, 252, 262 an die Schalter 41, 51, 61, 42, 52, 62 ausgegeben werden, vgl. Fig. 2, Fig. 3 und Fig. 5.

**Fig.17** zeigt eine Schaltung für die Auswertung der Signale an den Wicklungsanschlüssen 45, 55, 65 zur Durchführung einer sensorlosen Kommutierung. Der Anschluss 45 ist über einen Widerstand 124 mit einer Leitung 121 und diese über einen Widerstand 125 mit GND 32 verbunden. Der Anschluss 57 ist über einen Widerstand 126 mit einer Leitung 122 und diese über einen Widerstand 127 mit GND 32 verbunden. Der Anschluss 65 ist über einen Widerstand 128 mit einer Leitung 123 und diese über einen Widerstand 129 mit GND 32 verbunden. Die Leitungen 121, 122 bzw. 123 sind mit den Plus-Eingängen der Komparatoren 131, 132 bzw. 133 und über die Widerstände 134, 135 bzw. 136 mit einer Leitung 130 verbunden. Die Leitung 130 ist mit den Minus-Eingängen der Komparatoren 131, 132 und 133 verbunden. Die Open-Collector-Ausgänge der Komparatoren 131, 132 bzw. 133 sind mit den Eingängen 230', 230" bzw. 230''' des µC 23 verbunden, und an jedem der Ausgänge ist ein Pullup-Widerstand 137, 138 bzw. 139 vorgesehen.

Die Widerstände 124, 125 bzw. 126, 127 bzw. 128, 129 sind als Spannungsteiler ausgebildet und teilen die Spannungen an den Anschlüssen 45, 55, 65 herunter, um eine Verarbeitung mit den Komparatoren 131, 132, 133 zu ermöglichen. Die Spannungen an den Leitungen 121, 122 und 123 werden über die Widerstände 134, 135 und 136 zu einer gemeinsamen Spannung U_130 (Mittelwert) zusammengefasst, die der Spannung an einem virtuellen Sternpunkt an einer Sternpunkt-Wickelanordnung entspricht. In den Komparatoren 131, 132 und 133 findet ein Vergleich zwischen den Spannungen U_121, U_122 bzw. U_123 und der Spannung U_130 statt. An den Eingängen 230', 230" bzw. 230''' des µC 23 kann somit abgelesen werden, ob die Spannungen U_121, U_122 bzw. U_123 größer oder kleiner als die Spannung U_130 sind, und über eine fortlaufende Überwachung oder eine Interrupt-Steuerung kann der entsprechende Zeitpunkt eines Wechsels der Ausgangssignale der Komparatoren 131, 132 bzw. 133 ermittelt werden. In Fig. 2, Fig. 3 und Fig. 5 kann anhand der Pfeile 74 gesehen werden, an welchem Anschlusspunkt 45, 55 bzw. 65 ein Wechsel an den Eingängen 230', 230" bzw. 230''' detektiert werden kann und in welche Richtung dieser Wechsel stattfindet.

Beispielwerte für die verwendeten Bauteile:

Widerstände 124, 126, 128      22 kOhm

(fortgesetzt)

| Widerstände 125, 127, 129 | 10 kOhm |
|---|---|
| Widerstände 134, 135, 136 | 10 kOhm |
| Widerstände 137, 138, 139 | 33 kOhm |
| Komparatoren 131, 132, 133 | LM2901 |

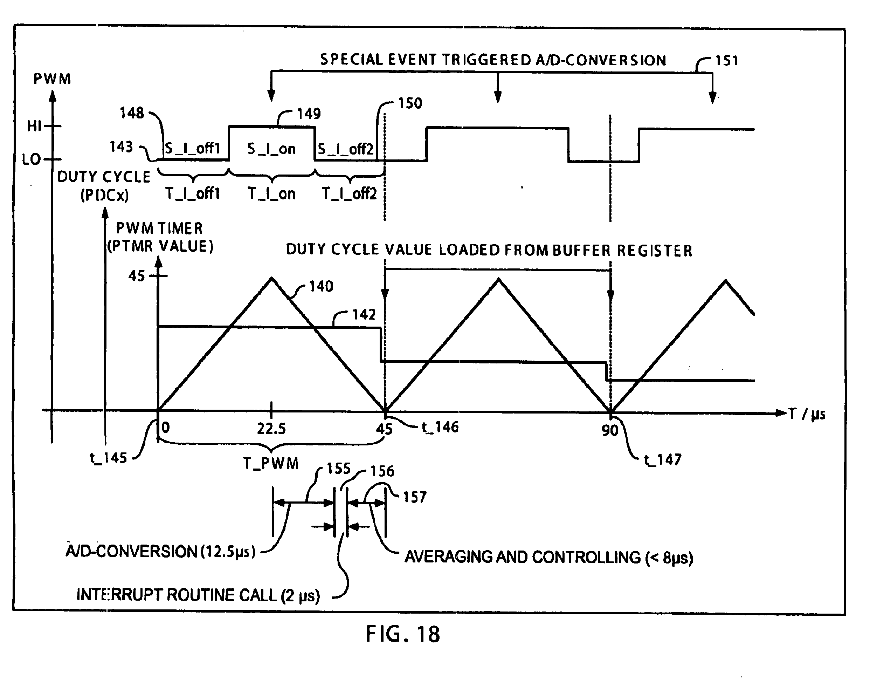

**Fig.18** zeigt eine mögliche Verwendung eines PWM-Generators eines µC 23 im so genannten "Center-Aligned PWM-Mode", bei dem der Puls (S-I_on) in der PWM-Periode T_PWM mittig ausgerichtet ist.

Bei diesem Ausführungsbeispiel beträgt die Frequenz des PWM-Signals 22 kHz, so dass eine PWM-Periode T_PWM 45 µs dauert. Während der ersten Hälfte (22,5 µs) wird ein Signal bzw. Wert 140 mit Hilfe eines PWM-Timers linear erhöht, und in der zweiten Hälfte (22,5 µs) wird das Signal 140 in gleicher Weise linear erniedrigt, so dass es nach 45 µs wieder bei Null angelangt ist. Mit Hilfe eines zweiten Werts 142 wird bestimmt, wie breit der Puls 149 des PWM-Signals ist. Das PWM-Signal 141 hat immer dann den Zustand High (Puls bzw. S-I_on), wenn das Signal 140 größer als der Wert 142 ist. Ist er dagegen kleiner, so hat das PWM-Signal 143 den Zustand LOW 148, 150 (Pause, S-I_off1 bzw. S-I_off2), wie dies zwischen den Zeitpunkten t_145 und t_146 zu sehen ist.

Zwischen den Zeitpunkten t_146 und t_147 ist der Wert 142 niedriger, und dies hat zur Folge, dass der Puls des PWM-Signals 143 breiter und damit das Tastverhältnis TV größer wird.

Ein Vorteil dieses PWM-Modus ist, dass einige Mikroprozessoren wie z.B. der PIC18F1330 der Fa. Microchip die Möglichkeit bieten, z.B. nach der Hälfte der PWM-Periode T_PWM einen Interrupt auszulösen oder aber eine A/D-Wandlung mit anschließendem Interrupt aufzurufen. Die jeweiligen Zeitpunkte sind mit 151 bezeichnet. Hierdurch kann die Messung der Spannung U_34 bzw. U_38 in der Mitte des Pulses 149, wie sie in der Beschreibung zu Fig. 6 und Fig. 7 erklärt ist, oder aber an jeder anderen Stelle der PWM-Periode ausgeführt werden.

Um eine Aktualisierung des Werts 142 vor Beginn der nachfolgenden PWM-Periode und damit einen schnellen und guten Strommittelwert-Regler zu ermöglichen, müssen die notwendigen Schritte in dem µC 23 zeitlich innerhalb von 22,5 µs ausgeführt werden. Bei dem genannten µC dauert die A/D-Wandlung 12,5 µs, der Aufruf der Interrupt-Routine nach Beendigung der A/D-Wandlung dauert 2 µs, so dass für die Berechnung des neuen Werts 142 weniger als 8 µs verbleiben. Bei der Verwendung des PIC18F1330, der mit 32 MHz getaktet ist, müssen nach der A/D-Wandlung die Berechnung des neuen Werts 142 incl. Strommittelwertbildung, Regelung und Aktualisierung des Tastverhältnisses TV mit maximal 60 Einzyklusbefehlen erfolgen. Dies war im vorliegenden Fall nur mit Assembler-Programmierung möglich, das Ergebnis der A/D-Wandlung wurde auf 8 Bit begrenzt, und der Maximalwert des Tastverhältnisses TV wurde ebenfalls auf 8 Bit begrenzt. Bei einem µC 23 mit höherer Leistung (z.B. DSP- Digitaler Signalprozessor, dsPIC33FJ12MC201) sind diese Optimierungen dagegen nicht zwingend erforderlich.

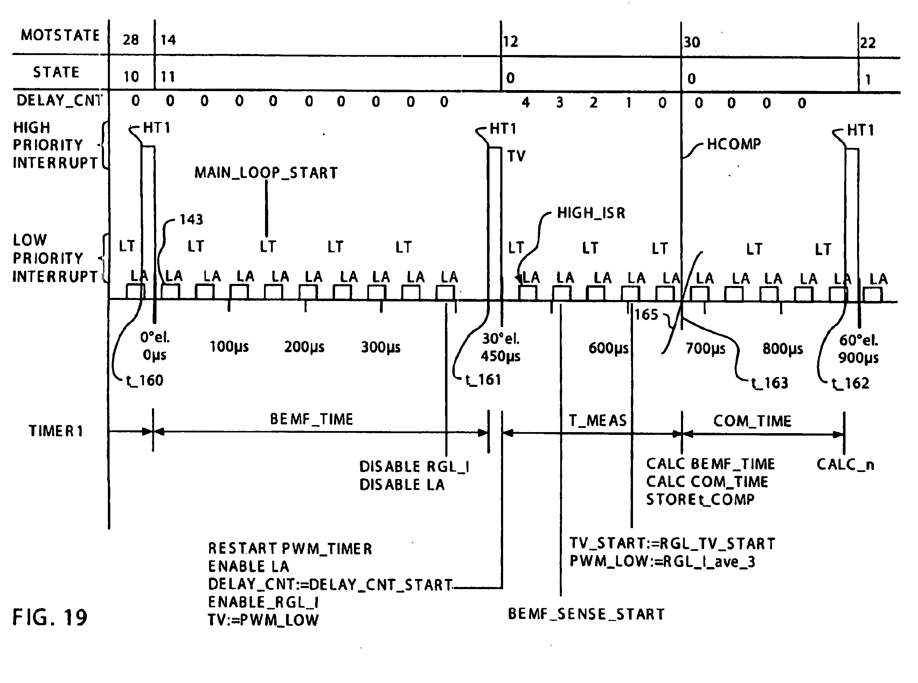

Fig. 19 zeigt eine schematische Darstellung der in dem µC 23 ablaufenden Schritte.

Dargestellt ist das PWM-Signal 143 für den Winkelbereich 0 °el. bis 60 °el. bei einer Zwölf-Schritt-Kommutierung gemäß Fig. 3 mit einem vierpoligen Rotor und einer Drehzahl n = 5.556 U/min = 92,59 U/s. Eine vollständige Umdrehung des Rotors benötigt damit 10,8 ms. Eine vollständige Umdrehung des Rotors entspricht bei einem vierpoligen Rotor 720 °el., und 30 °el. entsprechen damit einer Zeit 30 / 720* 10,8 ms = 450 µs.

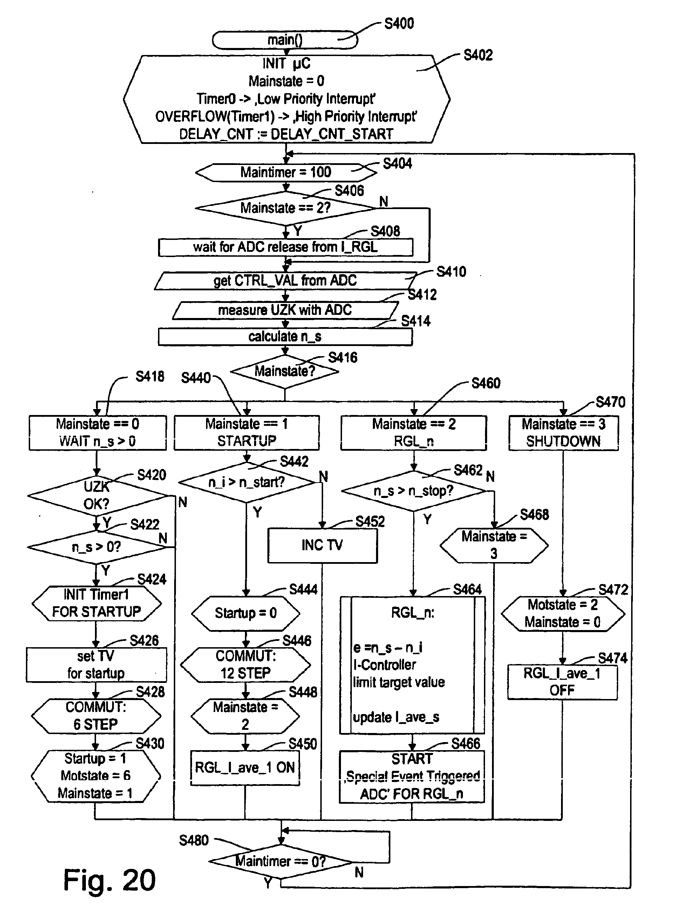

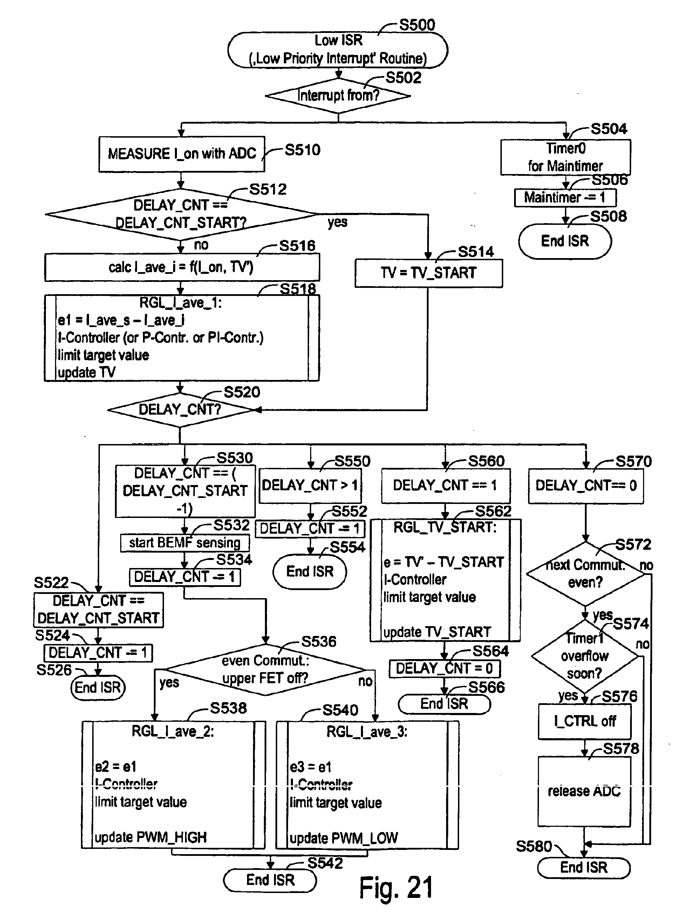

Die PWM-Frequenz beträgt 22 kHz, und damit beträgt die PWM-Periodendauer T_PWM = 45 µs. Bei der bereits relativ hohen Drehzahl von 5.556 U/min sind also ca. 9 bis 10 PWM-Impulse im elektrischen Winkelbereich von 30 °el. vorhanden. Das PWM-Signal 143 wird wie in Fig. 18 im "Center-Aligned PWM-Mode" erzeugt, und nach der A/D-Wandlung wird ein Interrupt LA erzeugt und damit eine Interrupt-Routine mit niedriger Priorität Low_ISR gemäß Fig. 21 aufgerufen. Ein von einem Timer Timer0 alle 100 µs erzeugter Interrupt LT (low priority interrupt - Timer 0) ist ebenfalls dargestellt, und durch diesen wird auch die Interrupt-Routine mit niedriger Priorität Low_ISR gemäß Fig. 21 aufgerufen, um eine Zeitbasis für das Hauptprogramm (Fig. 20) zu bilden.

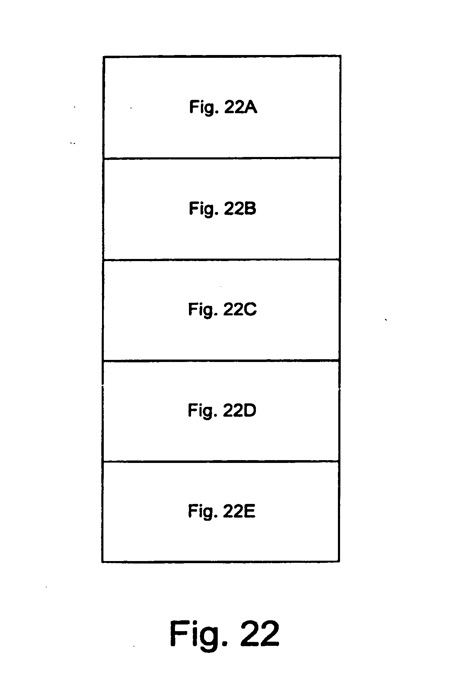

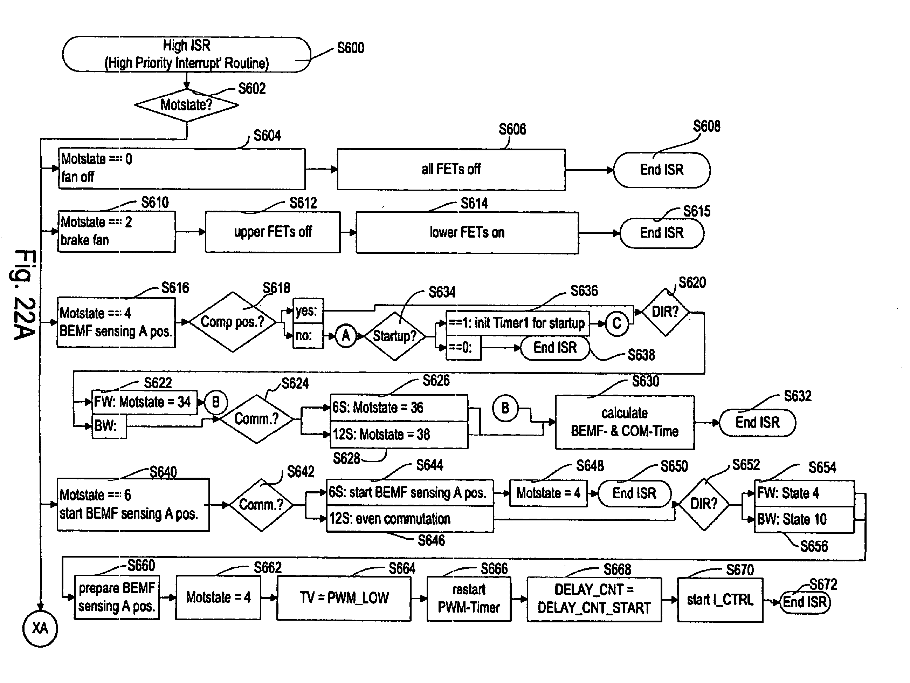

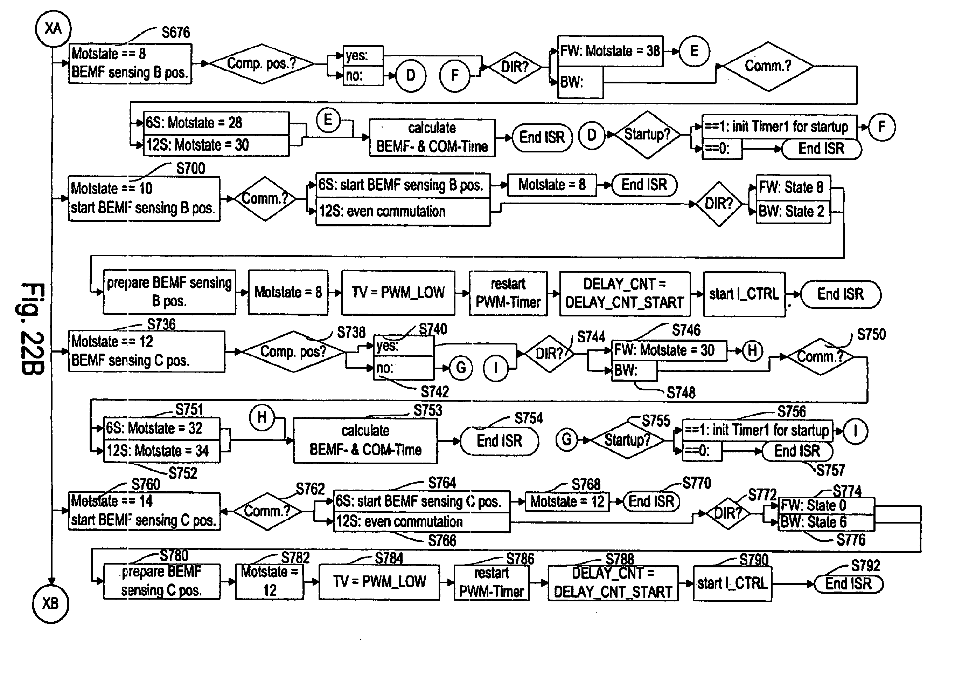

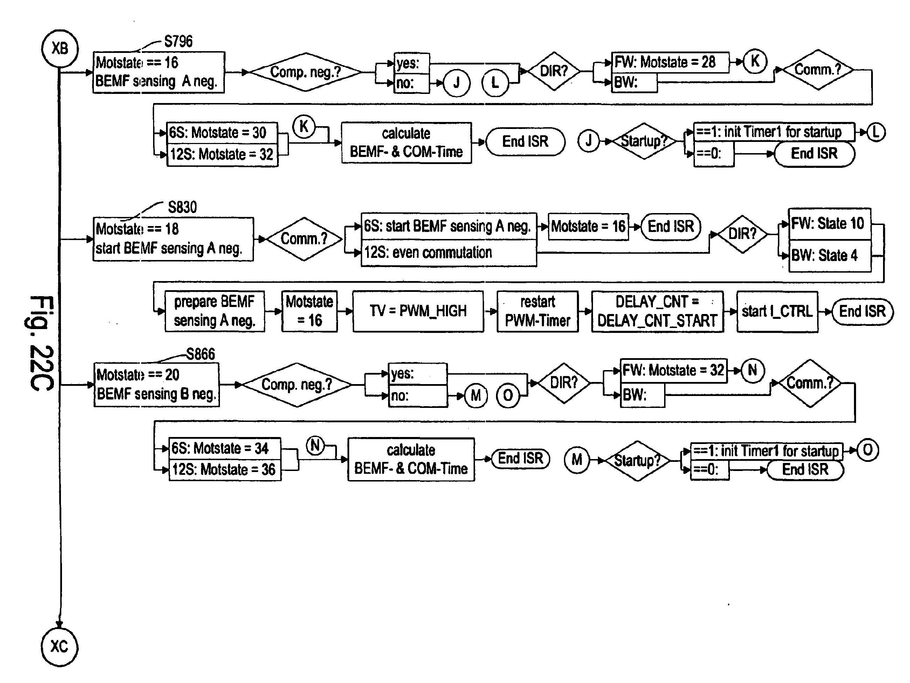

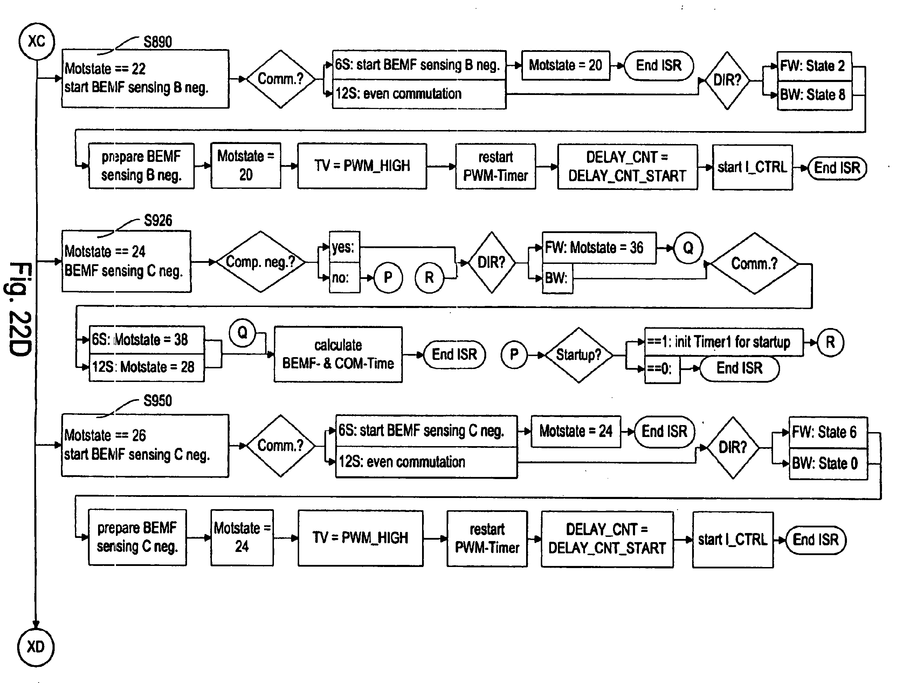

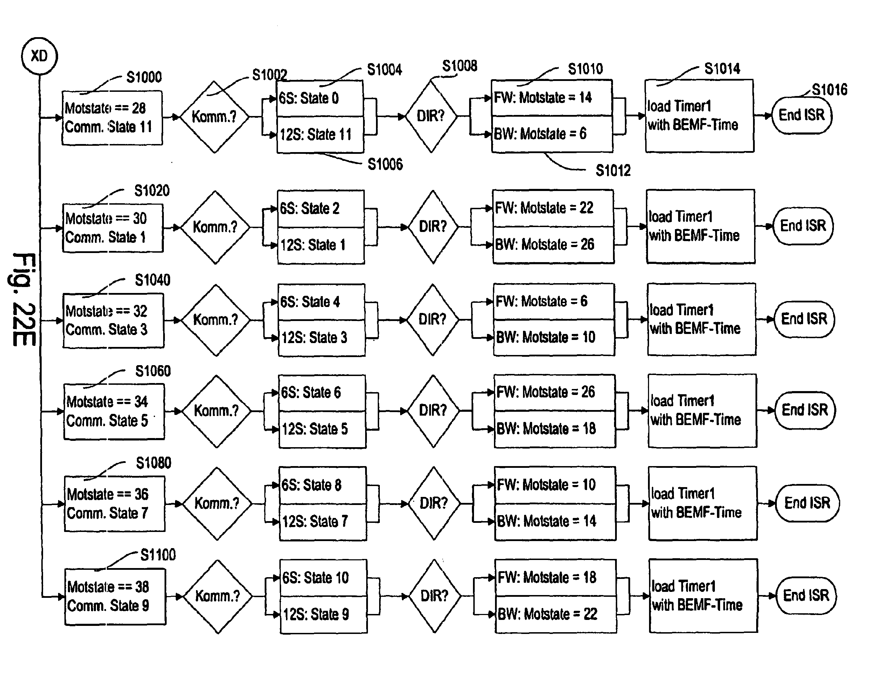

Oberhalb der Interrupt-Aufrufe LA und LT sind die Interrupt-Aufrufe HT1 und HCOMP zum Aufruf der Interrupt-Routine mit hoher Priorität High_ISR gemäß Fig. 22 dargestellt. Über den Timer Timer1 wird festgelegt, zu welchen Zeitpunkten t_160, t_161 und t_162 jeweils eine Kommutierung stattfinden soll, und die Kommutierung wird jeweils durch die Erzeugung eines Interrupts HT1 des Timers Timer1 initiiert. Zusätzlich erfolgt die Erkennung des Nulldurchgangs der induzierten Spannung an den in Fig. 3 mit 74 gekennzeichneten Stellen bzw. in Fig. 19 zum Zeitpunkt t_163 mit Hilfe des Interrupts HCOMP, der durch eine vorgegebene Änderung des Signals an dem entsprechend ausgewählten Eingang 230', 230", 230''' mit Hilfe der Schaltung gemäß Fig. 17 erzeugt wird. Mit der Erfassung des Nulldurchgangs der induzierten Spannung 165 zum Zeitpunkt t_163 ist die aktuelle Rotorstellung bekannt, und über eine Zeit COM_TIME wird die Zeit zwischen dem Nulldurchgang der induzierten Spannung 165 und der folgenden Kommutierung zum Zeitpunkt t_162 und damit auch die Vorzündzeit festgelegt.

Über einen so genannten Verzögerungszähler DELAY_CNT wird die Zusammenarbeit von einem normaler Stromregler RGL_I_ave_1 und zwei besonderen Stromreglern RGL__ave_2 bzw. RGL_I ave_3 zum verbesserten Ausregeln der Stromlücke nach einer Kommutierung mit Abschaltung eines oberen oder unteren Schalters gesteuert.

Bei der Kommutierung zum Zeitpunkt t_160 (Übergang Zustand State 10 -> State 11) wird gemäß Fig. 3 zusätzlich der untere Schalter 42 eingeschaltet. Da das Hinzuschalten eines Schalters nicht zur einer Stromlücke führt, kann der normale Stromregler RGL_I-ave_1 ohne Unterbrechung vor und nach dieser Kommutierung verwendet werden, und es wird nur zusätzlich der Schalter 42 eingeschaltet.

Zum Zeitpunkt t_160 wird in der Interrupt-Routine mit hoher Priorität High_ISR der Timer Timer1 auf einen Wert BEMF_TIME gesetzt, und nach Ablauf dieser Zeit wird zum Zeitpunkt t_161 ein Interrupt HT1 ausgelöst, und die nächste Kommutierung State 11 -> State 0 findet statt. Da gemäß Fig. 3 immer nach 60 °el. ein Nulldurchgang der induzierten Spannung 165 ermittelt wird, ergibt sich die Zeit BEMF_TIME z.B. durch Berechnung der Hälfte der Zeit zwischen zwei aufeinander folgenden Nulldurchgängen 74 der induzierten Spannung 165, und entsprechend wird zum Zeitpunkt t_163 bei "CALC BEMF_TIME" diese Zeit berechnet. Alternativ kann die Zeitdauer für 60 °el. auch durch Addition der Zeitdauern BEMF_TIME, T_MEAS und COM_TIME zum Zeitpunkt t_162 berechnet werden.

Im Zustand State 11 wird bei jedem Interrupt LA überprüft, ob die folgende Kommutierung zum Zeitpunkt t_161 in Kürze folgt. Falls ja, wird der Stromregler RGL_I_ave_1 abgeschaltet (DISABLE RGL_I), und die Interrupts LA werden auch abgeschaltet (DISABLE LA), da sie entsprechend nicht mehr benötigt werden und der A/D-Wandler dann für andere Aufgaben verwendet werden kann.

Bei der Kommutierung zum Zeitpunkt t_161 wird in der Interrupt-Routine High_ISR der untere Schalter 62 ausgeschaltet (vgl. Fig. 3), und dies führt zu einer Stromlücke, da der Strom, der über den oberen Schalter 51, den Strang 48 und den unteren Schalter 42 fließt, wegen der Induktivität des Strangs nicht sofort zur Kompensierung erhöht werden kann. Um den Strom I_M nach der Kommutierung möglichst konstant zu halten, wird bei der Kommutierung der PWM-Timer PWM_TIMER neu gestartet, um diesen mit der Kommutierung zu synchronisieren. Zusätzlich wird die Variable DELAY_CNT auf einen Startwert DELAY_CNT_START, z.B. 4, gesetzt, der Interrupt LA wird wieder eingeschaltet (ENABLE LA), das Tastverhältnis TV wird für die erste PWM-Periode (DELAY_CNT == 4) auf einen zuvor von dem Regler RGL_I_ave_3 berechneten Wert PWM_LOW gesetzt und die Stromregelung wird wieder eingeschaltet (ENABLE RGL_I). Die Regelung des Strommittelwerts I_ave kann durch die Durchführung einer speziellen Regelung nach dieser Kommutierung deutlich verbessert werden, da der normaler Regler mit der extremen Änderung nach der Kommutierung regeltechnisch überfordert wäre und die Regelung daher schlechter wäre.

Beim während der ersten PWM-Periode (DELAY_CNT== 4) auftretenden Interrupt LA wird in der Interrupt-Routine Low_ISR dem normalen Stromregler RGL_I_ave_1 zu dessen Initialisierung ein Tastverhältnis TV_START für die zweite PWM-Periode (DELAY_CNT == 3) vorgegeben und das Tastverhältnis TV auf diesen Wert gesetzt, wobei das Tastverhältnis TV_START von einem Startwertregler RGL_TV_START vorgegeben wird. Die Variable DELAY_CNT wird auf drei erniedrigt.

Beim während der zweiten PWM-Periode (DELAY_CNT == 3) auftretenden Interrupt LA wird die Erkennung des Nulldurchgangs der induzierten Spannung 165 gestartet (BEMF_SENSE_START). Der Start der Erkennung nach der Kommutierung soll verhindern, dass durch Störungen bei der Kommutierung eine Fehlerkennung des Nulldurchgangs der induzierten Spannung 165 stattfindet. Der normale Stromregler RGL_I_ave_1 wird zur Berechnung des Tastverhältnisses für die dritte PWM-Periode (DELAY_CNT == 2) aufgerufen, und der besonderen Regler RGL_I ave_3 wird aufgerufen, um in Abhängigkeit von der aktuellen Regeldifferenz des Stromreglers den Vorgabewert PWM_LOW zu regeln bzw. zu verbessern. Ist die aktuelle Regeldifferenz I_ave_s-I_ave_i gleich Null, so wird die Stromlücke mit dem Tastverhältnis PWM_LOW gut geregelt. Damit steht für die nächste Kommutierung mit Ausschalten eines unteren Schalters ein neuer Startwert zur Verfügung.

Beim während der vierten PWM-Periode (DELAY_CNT == 1) auftretenden Interrupt LA wird ein Regler zur Bestimmung des Startwerts für das Tastverhältnis TV_START ausgeführt, und dieser berechnet den Startwert für die Initialisierung des Strommittelwertreglers RGL-I-ave_1 bei der ersten PWM-Periode.

Beim Nulldurchgang der induzierten Spannung 165 zum Zeitpunkt t_163 wird der Interrupt HCOMP erzeugt, und in der zugehörigen Interrupt-Routine High_ISR wird die aktuelle Zeit t_COMP gespeichert (STORE t_COMP), um beim nächsten Nulldurchgang die Zeitdifferenz bilden zu können, der Wert BEMF_TIME für die für 30 °el. benötigte Zeit kann berechnet werden, indem die Hälfte der - wie oben ausgeführt - berechneten Zeitdauer für 60 °el. berechnet wird. Der Wert COM_TIME für die Zeit zwischen dem aktuellen Nulldurchgang zum Zeitpunkt t_163 und der folgenden Kommutierung t_162 wird berechnet und der Timer Timer1 entsprechend gesetzt. Über die Zeit COM_TIME wird auch die Vorzündung bestimmt, und in einem einfachen Ausführungsbeispiel kann diese Zeit konstant gewählt werden, was zur Folge hat, dass bei niedrigen Drehzahlen eine kleine Vorzündung und bei hohen Drehzahlen eine große Vorzündung stattfindet.

Im oberen Bereich ist eine Motorvariable MOTSTATE mit den entsprechenden Werten (28, 14, 12, 30 und 22) angegeben, und über diese Zustandsvariable speichert die Interrupt-Routine High_ISR, in welchem Zustand sich der Motor derzeit befindet. Vorteilhaft an dieser sensorlosen Zwölf-Schritt-Kommutierung ist, dass die Messung der Nulldurchgänge der induzierten Spannungen in den durch den jeweiligen Winkelbereich vorgegebenen Wicklungsanschlüssen 45, 55 bzw. 65 nur in sechs der zwölf Kommutierungsperioden durchgeführt wird. Dies ermöglicht bei einer Verwendung einer Sechs-Schritt-Kommutierung für den Start einen einfacheren Programmaufbau und damit einen günstigeren Prozessor.

Fig. 20 zeigt das Hauptprogramm main(), Fig. 21 die Interrupt-Routine mit niedriger Priorität Low_ISR und Fig. 22, Fig. 22A, Fig. 22B, Fig. 22C, Fig. 22D und Fig. 22E die Interrupt-Routine mit hoher Priorität High_ISR, welche zusammen eine 12 Schritt-Kommutierung für einen eingangsstromgeregelten sensorlosen Lüfter ermöglichen.

Bei allen Flussdiagrammen bedeuten:

| | |
|---|---|
| = | Zuweisung |
| === | Vergleich auf Gleichheit |
| -= | Dekrementieren um den Wert 1 |
| N/NO | nein |
| Y/YES | ja |
| Comm. | Kommutierungsart |
| 6S | 6 Schritt-Kommutierung |
| 12S | 12 Schritt-Kommutierung |
| DIR | Drehrichtung |
| FW | Drehrichtung vorwärts (z.B. im Urzeigersinn) |
| BW | Drechrichtung rückwärts (z.B. gegen den Urzeigersinn) |
| pos. | positiv |
| neg. | negativ |
| init | initialisieren |
| Comp. | Komparator |

Das Hauptprogramm beginnt im Schritt S400. Im Schritt S402 wird der µC initialisiert, die Zustandsvariable Mainstate einer Zustandsmaschine wird auf den Wert Null gesetzt, der Timer Timer0 wird so initialisiert, dass er jede ms einen Interrupt auslöst, der von der Routine Low_ISR S500 abgearbeitet wird. Der Timer Timer1 wird derart initialisiert, dass bei dessen Überlauf ein Interrupt ausgelöst wird, der von der Interrupt-Routine High_ISR S600 abgearbeitet wird. Eine Variable DELAY_CNT_START wird auf einen Wert zwischen 3 und 5 initialisiert, und dieser Wert wird als Startwert für einen Verzögerungszähler DELAY_CNT verwendet, der die Verzögerung zwischen einer geraden Kommutierung und dem Start der BEMF-Erkennung bestimmt.

Im Schritt S404 beginnt die Hauptschleife, und der Timer Maintimer wird auf 100 gesetzt. Hierdurch wird bestimmt, dass die Hauptschleife alle 100 ms in Abhängigkeit vom Timer Timer0 durchlaufen wird. Im Schritt S406 wird überprüft, ob der Zustand Mainstate den Wert 2 hat. Falls JA, wird im Schritt S408 auf die ADC-Freigabe des A/D-Wandlers von der Stromregelung I_RGL gewartet, da der A/D-Wandler des µC für beide Aufgaben verwendet wird und somit die Aufgaben nicht gleichzeitig ausführen kann. Anschließend wird zum Schritt S41 0 gesprungen. Falls die Antwort im Schritt S406 NEIN ist, wird direkt zum Schritt S41 0 gesprungen. Im Schritt S41 0 wird ein Wert CTRL_VAL über den A/D-Wandler eingelesen, wobei dieser Wert z. B. von einem externen oder integrierten NTC-Widerstand, einer Steuerspannung von 0 bis 10 V oder einem externen PWM-Signal vorgegeben wird. Im Schritt S412 wird die Zwischenkreisspannung UZK mit dem A/D-Wandler ADC erfasst. Im Schritt S414 wird die Solldrehzahl n_s bspw. mittels einer Temperatur/Drehzahl-Kennlinie aus dem Wert CTRL_VAL berechnet.

Anschließend wird im Schritt S416 überprüft, in welchem Zustand Mainstate sich das Hauptprogramm befindet. Ist der Zustand Mainstate gleich 0 (Solldrehzahl n_s ist bisher gleich Null) so wird zum Schritt S418 gesprungen. Im Schritt S420 wird überprüft, ob der Wert UZK für die Zwischenkreisspannung im erlaubten Bereich liegt. Falls NEIN, so wird direkt zum Schritt S480 gesprungen. Falls JA, so wird im Schritt S422 überprüft, ob die Solldrehzahl n_s größer als Null ist. Falls NEIN, wird zum Schritt S480 gesprungen. Falls JA, wird der Timer Timer1 für den Anlauf des Motors im Schritt S424 initialisiert. Das Tastverhältnis TV (engl.: duty cycle) für das PWM-Signal wird für den Anlauf gesetzt. Im Schritt S428 wird festgelegt, dass beim Anlauf eine Sechs-Schritt-Kommutierung durchgeführt werden soll. Im Schritt S430 wird anschließend die Variable Startup auf 1 gesetzt, die Zustandsvariable Motstate auf 6 und die Zustandsvariable Mainstate auf 1. Anschließend wird zum Schritt S480 gesprungen.

War dagegen im Schritt S416 der Zustand Mainstate gleich 1 (Zustand: Anlauf), so wird zum Schritt S440 gesprungen. Im Schritt S442 wird überprüft, ob die Anlaufdrehzahl n_start bereits erreicht wurde. Falls NEIN. wird zum Schritt S452 gesprungen, und das Tastverhältnis TV des PWM-Signals wird erhöht. Falls JA, wird zum Schritt S444 gesprungen, und dort wird der Wert Startup auf Null gesetzt. Anschließend wird im Schritt S446 die Zwölf-Schritt-Kommutierung eingeschaltet, im Schritt S448 der Zustand Mainstate auf 2 (Zustand: Regelung) gesetzt und im Schritt S450 der Stromregler RGL_I_ave_1 eingeschaltet. Anschließend wird zum Schritt S480 gesprungen.

War im Schritt S416 der Zustand Mainstate gleich 2 (Zustand: Regelung), so wird zum Schritt S460 gesprungen. Im Schritt S462 wird überprüft, ob die Solldrehzahl n_s größer als eine Ausschaltdrehzahl n_stop ist. Falls NEIN, wird im Schritt S468 der Zustand Mainstate auf 3 (Zustand: Ausschalten) gesetzt und zum Schritt S480 gesprungen. Falls JA, wird zum Schritt S464 gesprungen, und dort wird der Drehzahlregler RGL_n (95 in Fig. 16) ausgeführt. Im Drehzahlregler wird die Regeldifferenz aus der Differenz von Solldrehzahl n_s und Istdrehzahl n_i berechnet und einem I-Regler (Integral-Regler) I-Controller zugeführt. Der ermittelte Stellwert wird ggf. begrenzt und anschließend dem Stromregler als Sollwert I_ave_s zugeführt. Anschließend wird im Schritt S466 die A/D-Wandlung der Spannung U_38 in der Mitte des PWM-Pulses eingeschaltet, und es erfolgt ein Sprung nach S480. Die Stromregelung aus Fig. 21 wird somit erst bei drehendem Motor eingeschaltet, da sie bei stehendem Motor nur schlecht oder gar nicht funktioniert.

War im Schritt S416 der Zustand Mainstate gleich 3 (Zustand: Ausschalten), so wird zum Schritt S470 gesprungen. Im Schritt S472 werden der Zustand Motstate auf 2 und der Zustand Mainstate auf Null gesetzt. Im Schritt S474 wird anschließend die Stromregelung ausgeschaltet und zum Schritt S480 gesprungen. Im Schritt S480 wird überprüft, ob der Wert Maintimer den Wert Null hat, ob also der Timer Timer0, der den Wert Maintimer jede ms um 1 verringert, bereits hundertmal aufgerufen wurde. Falls NEIN, wird weiter gewartet und zum Schritt S480 gesprungen. Falls JA, sind 100 ms seit dem letzten Aufruf der im Schritt S404 beginnenden Hauptschleife abgelaufen, und es wird zurück zum Schritt S404 gesprungen.

**Fig. 21** zeigt die Interrupt-Routine Low_ISR S500.

Im Schritt S502 wird überprüft, wodurch die Interrupt-Routine S500 ausgelöst wurde. Im Falle einer Auslösung durch den Timer Timer0 wird zum Schritt S504 gesprungen, im Schritt S506 wird der Timer Maintimer um 1 erniedrigt, und im Schritt S508 wird die Interrupt-Routine verlassen. Hierdurch wird der für das Timing des Hauptprogramms verwendete Wert Maintimer jeweils nach einer ms dekrementiert.

Wurde dagegen der Interrupt nach Beendigung einer angeforderten A/D-Wandlung (initialisiert im Schritt S466, Fig. 20) ausgelöst, so wird vom Schritt S502 zum Schritt

S510 gesprungen und dort durch A/D-Wandlung der den aktuellen Strom charakterisierende Wert I_on ermittelt. Im Schritt S512 wird überprüft, ob der Verzögerungszähler DELAY_CNT den Wert DELAY_CNT_START hat. Falls NEIN, wird im Schritt S516 der Wert I_ave_i aus dem gemessenen Stromwert I_on und dem Tastverhältnis TV' berechnet. Anschließend wird im Schritt S518 der normale Stromregler RGL_I_ave_1 aufgerufen, und in diesem wird die Regeldifferenz e1 aus dem Sollwert I_ave_s und dem Istwert I_ave_i berechnet und einem I-Regler (oder z. B. auch P (Proportional)-Regler, PI(Proportional-Integral)-Regler) zugeführt. Anschließend wird ggf. der Stellwert begrenzt, das Tastverhältnis TV für das PWM-Signal aktualisiert und zum Schritt S520 gesprungen. War im Schritt S512 dagegen der Wert DELAY_CNT gleich dem Wert DELAY_CNT_START, was direkt nach einer Kommutierung von einem ungeraden Zustand State zu einem geraden Zustand State der Fall ist, so wird zum Schritt S514 gesprungen, und dort wird das Tastverhältnis TV auf den Startwert TV_START gesetzt und anschließend zum Schritt S520 gesprungen. Die Programmschritte S516 und S518 müssen bei einfacheren Mikroprozessoren aus Geschwindigkeitsgründen in Assembler geschrieben werden.

Im Schritt S520 wird der Verzögerungszähler DELAY_CNT überprüft und in Abhängigkeit von der Überprüfung zu einem der Schritte S522, S530, S550, S560 oder S570 gesprungen. Zum Schritt S522 wird gesprungen, wenn der Verzögerungszähler DELAY_CNT den gleichen Wert wie DELAY_CNT_START hat. Im Schritt S524 wird der Wert DELAY_CNT um 1 verringert und anschließend im Schritt S526 die Interrupt-Routine verlassen. Beim nächsten Durchlauf der Interrupt-Routine hat die Variable DELAY_CNT den Wert DELAY_CNT_START - 1, und es wird zum Schritt 530 gesprungen. Im Schritt S532 wird die Erkennung der induzierte Spannung BEMF (back electromagnetic force) gestartet, wobei eingestellt wird bei welchem Nulldurchgang (von + nach - oder umgekehrt, Wicklungsanschluss 45, 55 oder 65, vgl. Fig. 3) ein HCOMP-Interrupt ausgelöst wird. Im Schritt S534 wird die Variable DELAY_CNT um 1 verringert, und anschließend wird im Schritt S536 überprüft, ob bei der Kommutierung von einem ungeraden Zustand State zu einem geraden Zustand State einer der oberen Schalter 41, 51, 61 ausgeschaltet wurde. Falls JA, wird ein Regler RGL_I_ave_2 im Schritt S538 aufgerufen. Bei diesem Regler handelt es sich um einen für die nach einer Kommutierung auftretenden Stromlücke optimierten Regler. Als Regeldifferenz e2 wird die aktuelle Regeldifferenz e1 des Stromreglers RGL_I_ave_1 verwendet, und diese wird einem optimierten I-Regler zugeführt. Anschließend geschieht ggf. eine Begrenzung des Stellwerts PWM_HIGH, und dieser wird nach der nächsten entsprechenden Kommutierung als Stellwert für die erste PWM-Periode verwendet.

War die Antwort im Schritt S536 dagegen NEIN, so wird zum Schritt S540 gesprungen und dort der Stromregler RGL_I_ave_3 aufgerufen, der für die Regelung bei einer nach einer Kommutierung von einem ungeraden Zustand State zu einem geraden Zustand State mit Ausschaltung eines der unteren Schalter 42, 52, 62 auftretenden Stromlücke optimiert ist. Als Regeldifferenz e3 wird die aktuelle Regeldifferenz e1 des Stromregler RGL_I ave_1 verwendet, und diese wird einem optimierten I-Regler zugeführt. Der Stellwert PWM_LOW wird ggf. begrenzt und nach der nächsten entsprechenden Kommutierung als Stellwert für die erste PWM-Periode verwendet. Anschließend wird im Schritt S542 die Interrupt-Routine verlassen.

Beim nächsten Aufruf der Routine S500 ist die Variable DELAY_CNT immer noch größer als 1, und vom Schritt S550 wird zum Schritt S552 gesprungen und die Variable DELAY_CNT um 1 verringert. Hierdurch wird eine weitere Verzögerung bewirkt. Anschließend wird im Schritt S554 die Interrupt-Routine verlassen.

Hat bei einem der folgenden Aufrufe die Variable DELAY_CNT den Wert 1, so wird vom Schritt S520 zum Schritt S560 gesprungen, und anschließend wird im Schritt S562 ein Regler RGL_TV_START aufgerufen, in dem ein Startwert e1 für den Stromregler RGL_I_ave_1 S518 mit Hilfe eines Reglers ermittelt wird. Hierzu wird als Regeldifferenz die Differenz zwischen dem Tastverhältnis TV und dem bisherigen Startwert TV_START des Stromreglers gebildet und einem I-Regler zugeführt. Anschließend wird der resultierende Stellwert ggf. begrenzt und der Variablen TV_START zugewiesen. Im Schritt S564 wird die Variable DELAY_CNT auf Null gesetzt und im Schritt S566 die Interrupt-Routine verlassen.

Beim nächsten Aufruf der Interrupt-Routine S500 wird vom Schritt S520 zum Schritt S570 gesprungen, da die Variable DELAY_CNT den Wert Null hat. Im Schritt S572 wird überprüft, ob die nächste Kommutierung eine gerade Kommutierung ist. Falls NEIN, wird direkt im Schritt S580 die Interrupt-Routine verlassen. Falls JA, wird im Schritt S574 überprüft, ob der Timer Timer1 kurz vor einem Überlauf steht, indem z.B. überprüft wird, ob der Timer Timer 1 größer als ein vorgegebener Wert ist. Falls NEIN, wird die Routine im Schritt S580 verlassen. Falls JA, wird im Schritt S576 der Stromregler I_CTRL ausgeschaltet, und im Schritt S578 wird der A/D-Wandler für das Hauptprogramm freigegeben, damit mit diesem im Hauptprogramm der Wert CTRL_VAL im Schritt S410 und anschließend der Wert UZK für die Zwischenkreisspannung im Schritt S412 gemessen werden können. Bis zur folgenden Kommutierung findet keine Stromregelung mehr statt. Dies hat nur geringe Einflüsse auf den Eingangsstrom I_IN, I_M, da die Stromänderungen kurz vor der Kommutierung gering sind. Anschließend wird die Interrupt-Routine im Schritt S580 verlassen.

**Fig. 22** zeigt die Interrupt-Routine High_ISR S600 für einen eingangsstrommittelwertgeregelten Lüfter mit sensorloser Zwölf-Schritt-Kommutierung und Sechs-Schritt-Kommutierung für den Start, mit Vorwärts- und Rückwärtslauf. Im Schritt S602 wird die Zustandsvariable Motstate überprüft und in Abhängigkeit von deren Wert zu einem der Schritte S604, S610, S616, S640, S676, S700, S736, S760, S796, S830, S866, S890, S926, S950, S1000, S1020, S1040, S1060, S1080 oder S1100 gesprungen. Hat die Zustandsvariable Motstate den Wert Null (Zustand: Lüfter aus), so wird vom Schritt S604 zum Schritt S606 gesprungen, und alle Endstufentransistoren 41, 51, 61, 42, 52, 62 werden ausgeschaltet. Anschließend wird die Interrupt-Routine im Schritt S608 verlassen.

Hat die Zustandsvariable Motstate den Wert 2 (Zustand: Lüfter bremsen), so wird vom Schritt S610 zum Schritt S612 gesprungen, und die oberen Endstufentransistoren 41, 51, 61 werden ausgeschaltet. Anschließend werden die unteren Endstufentransistoren 42, 52, 62 im Schritt S614 eingeschaltet, um im unteren Bereich der Endstufe ein Stromkreisen zu bewirken und den Strom in der Statoranordnung 16 zu vermindern. Im Schritt S615 wird die Interrupt-Routine verlassen.

Hat die Zustandsvariable Motstate den Wert 4 (Zustand: BEMF Erkennung A positiv), so wird vom Schritt S616 zum Schritt S618 gesprungen, und dort wird überprüft, ob ein positives Signal an dem Komparator, an dem die induzierte Spannung verglichen wird, vorliegt. Falls JA, erfolgt ein Sprung zum Schritt S620, und falls NEIN, erfolgt ein Sprung zum Schritt S634. Im Schritt S620 wird die Drehrichtung überprüft. Falls die Drehrichtung vorwärts ist, so wird im Schritt S622 die Zustandsvariable Motstate auf 34 gesetzt und zum Schritt S630 gesprungen. Falls die Drehrichtung hingegen rückwärts ist, wird zum Schritt S624 gesprungen. Im Schritt S624 wird überprüft, welcher Art der Kommutierung durchgeführt werden soll. Im Falle einer Sechs-Schritt-Kommutierung wird die Zustandsvariable Motstate im Schritt S626 auf 36 gesetzt. Falls eine Zwölf-Schritt-Kommutierung durchgeführt werden soll, wird die Zustandsvariable Motstate im Schritt S628 auf 38 gesetzt. Anschließend wird zum Schritt S630 gesprungen, in dem eine Berechung der BEMF und COM-Zeiten erfolgt, und im Schritt S632 wird die Interrupt-Routine verlassen. Im Schritt S634 wird überprüft, welchen Wert die Variable Startup hat. Falls der Wert 1 ist (Startvorgang), wird im Schritt S636 der Timer Timer1 für den Anlauf initialisiert und anschließend zum Schritt S620 gesprungen. Falls der Wert dagegen Null ist, wird im Schritt S638 die Interrupt-Routine verlassen.

Hat im Schritt S602 die Zustandsvariable Motstate den Wert 6 (Zustand: BEMF Erkennung A positiv starten), so wird zum Schritt S640 gesprungen und anschließend im Schritt S642 überprüft, welche Art der Kommutierung durchgeführt werden soll. Bei einer Sechs-Schritt-Kommutierung erfolgt ein Sprung zum Schritt S644, und die BEMF-Erkennung A positiv wird gestartet. Anschließend wird im Schritt S648 die Zustandsvariable Motstate auf 4 gesetzt und im Schritt S650 die Interrupt-Routine verlassen. Ist bei der Prüfung im Schritt S642 dagegen eine Zwölf-Schritt-Kommutierung eingestellt, so wird im Schritt S646 festgelegt, dass es sich um eine gerade Kommutierung, d.h. einen Wechsel von dem ungeraden Zustand State = 3 zu dem geraden Zustand State = 4 handelt. Anschließend wird im Schritt S652 die Drehrichtung überprüft. Ist diese vorwärts, so wird im Schritt S654 die Variable State auf 4 gesetzt und anschließend zum Schritt S660 gesprungen. Ist die Drehrichtung dagegen rückwärts, so wird im Schritt S656 die Variable State auf 10 gesetzt und zum Schritt S660 gesprungen. Im Schritt S660 wird die BEMF-Erkennung A positiv vorbereitet, es wird also festgelegt, dass ein HCOMP-Interrupt (Fig. 19) ausgelöst werden soll, wenn das Ausgangssignal des Komparators 131 (Fig. 17) von LOW auf HIGH wechselt. Im Schritt S662 wird die Zustandsvariable Motstate auf 4 gesetzt. Im Schritt S664 wird das Tastverhältnis TV auf den Wert PWM_LOW (PWM_LA_LB_LC_AUS) des Reglers RGL_I_ave_3 gesetzt. Anschließend wird im Schritt S666 der PWM-Timer für die Ausgabe des getakteten Signals an die Endstufe mit dem neuen Tastverhältnis TV gestartet. Im Schritt S668 wird die Variable DELAY_CNT auf den Wert DELAY_CNT_START gesetzt, um die entsprechenden Schritte ab dem Schritt S520 in der Interrupt-Routine S500 auszuführen. Im Schritt S670 wird der Stromregler eingeschaltet und die Interrupt-Routine anschließend im Schritt S672 verlassen. Die Abläufe in den Schritten S676 bis S950 funktionieren analog für die übrigen Kommutierungsschritte und werden daher nicht im Einzelnen beschrieben.

Falls im Schritt S602 die Zustandsvariable Motstate den Wert 28 hat, erfolgt ein Sprung zum Schritt S1000 (Zustand: Kommutierung State11). Im Schritt S1002 wird überprüft, wie kommutiert werden soll. Bei einer Sechs-Schritt-Kommutierung wird die Variable State im Schritt S1004 auf Null gesetzt und zum Schritt S1008 gesprungen. Bei einer Zwölf-Schrift-Kommutierung wird im Schritt S1006 die Variable State auf 11 gesetzt, wodurch die Bestromung der Endstufe 16 gemäß Fig. 3 geändert wird, ohne dass das getaktete Signal neu gestartet werden muss. Anschließend wird zum Schritt S1008 gesprungen und dort die Drehrichtung ermittelt. Bei vorwärts wird die Zustandsvariable Motstate im Schritt S1010 auf 14 gesetzt, und bei rückwärts wird die Zustandsvariable Motstate im Schritt S1012 auf 6 gesetzt. Anschließend wird in Schritt S1014 der Timer Timer1 mit der Zeit BEMF-Time geladen. Im Schritt S1016 wird die Interrupt-Routine verlassen. Die Schritte S1020 bis S1100 funktionieren analog für die entsprechenden Zustände und werden daher nicht noch einmal beschrieben.

Zur Veranschaulichung wird der Ablauf gemäß Fig. 19 in Bezug auf die Routine High_ISR S600 kurz beschrieben. Zum Zeitpunkt t_160 wird die Routine High_ISR S600 aufgerufen. Der Zustand Motstate ist gleich 28, und es erfolgt ein Sprung zum Schritt S1000. Da eine Zwölf-Schritt-Kommutierung in Vorwärtsrichtung durchgeführt wird, wird im Schritt S1006 der Kommutierungszustand State auf 11 gesetzt, vgl. Fig. 3, so dass der untere Schalter 42 zusätzlich eingeschaltet wird. Die Zustandsvariable Motstate wird im Schritt S1010 auf 14 gesetzt und der Timer Timer1 im Schritt S1014 auf die BEMF-Zeit bis zur nächsten Kommutierung gesetzt. Danach wird die Routine High_ISR verlassen.

Zum Zeitpunkt t_161 folgt der nächste Timer1-Interrupt, und in der Routine High_ISR wird zum Schritt S760 (Motstate = 14) gesprungen. Im Schritt S774 wird der Kommutierungszustand State auf 0 gesetzt, wodurch gemäß Fig. 3 der Zustand des Schalters 62 von leitend (HIGH) auf nicht-leitend (LOW) gesetzt wird. Da gemäß Fig. 3 der zu detektierende Nulldurchgang der induzierten Spannung im Zweig C von negativ nach positiv stattfindet, wird die Erkennung im Schritt S780 entsprechend initialisiert, dass bei einem solchen Übergang ein HCOMP-Interrupt (Fig. 19) ausgelöst wird. Anschließend wird im Schritt S780 die Zustandsvariable Motstate auf 12 gesetzt, im Schritt S784 das Tastverhältnis für die erste PWM-Periode auf den Startwert PWM_LOW des Reglers RGL_I_ave_3 gesetzt, im Schritt S786 der PWM-Timer neu gestartet, im Schritt S788 der Zähler DELAY_CNT auf den Wert 4 gesetzt und im Schritt S790 der Stromregler RGL_I_ave_1 eingeschaltet. Im Schritt S792 wird die Routine verlassen.

Bei dem Wechsel der induzierten Spannung 165 zum Zeitpunkt t_163 wird durch den HCOMP-Interrupt wieder die Routine High_ISR S600 aufgerufen, und es wird zum Schritt S736 (State = 12) gesprungen. Im Schritt S746 wird die Zustandsvariable Motstate auf 30 gesetzt, im Schritt S753 werden die Zeitwerte BEMF_Time und COM-Time berechnet und anschließend die Routine im Schritt S754 verlassen.

Beim folgenden Timer1-Interrupt wird in der Routine High_ISR S600 zum Schritt S1020 gesprungen, und es erfolgt die nächste Kommutierung.

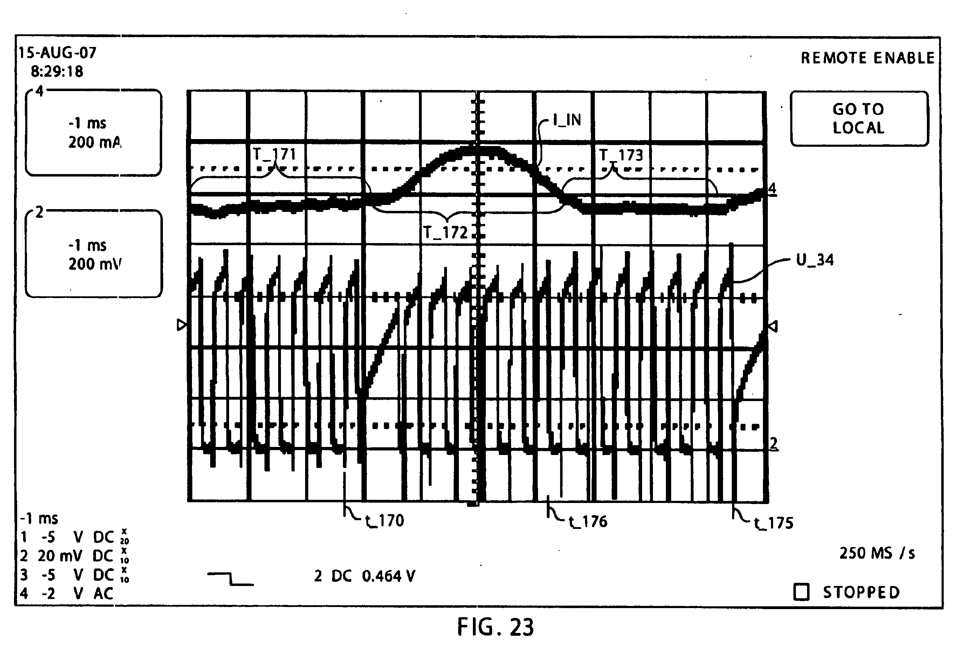

**Fig. 23** zeigt eine Messung der Spannung U_34 am Messwiderstand 36 (Fig. 1) und den Eingangsstrom I_IN (Fig. 1) bei einem eingangsstromgeregelten Lüfter mit Zwölf-Schritt-Kommutierung, U_B = 48 V, Leistung P = 100 W und Drehzahl n = 7700 min$^{-1}$.

Zu den Zeitpunkten t_170 und t_175 findet jeweils eine Kommutierung von einem ungeraden Zustand (State 1, 3, 5,7,9,11) zu einem geraden Zustand (State 0, 2, 4, 6, 8, 10) statt, und es ist gut zu sehen, dass bei dieser hohen Drehzahl nach dem Kommutierungsvorgang jeweils für zwei ganze PWM-Perioden ein Tastverhältnis TV von 100 % vorgegeben wird, um die Stromlücke möglichst klein zu halten. Zum Zeitpunkt t_176 findet eine Kommutierung von einem geraden Zustand (State 0, 2, 4, 6, 8,10) zu einem ungeraden Zustand (State 1, 3, 5, 7, 9, 11) statt. Da bei einer solchen Kommutierung ein oberer oder unterer Schalter zusätzlich eingeschaltet wird, entsteht keine Stromlücke.

Der Eingangsstrom I_IN ist während der Zeitdauern T_171 und T_173 weitgehend konstant, er steigt jedoch nach den Kommutierungsvorgängen zu den Zeitpunkten t_170 und t_175 während einer Zeit T_172 an. Man kann von einem Überschwingen des Eingangsstroms 1_IN reden. Dieses Überschwingen wird von dem Messwiderstand 36 (Fig. 1) nicht erfasst, da der zusätzliche Strom in den Zwischenkreiskondensator 22 als Strom I_C (Fig. 1) hineinfließt. Eine Verbesserung der Regelung kann durch ein zusätzliches Strommessglied zum Messen des in die Speicheranordnung 22 fließenden Stroms I_C bzw. I_C' und Berücksichtigung des gemessenen Werts bei der Stromregelung verbessert werden, sofern dies für den Einsatz des Elektromotors notwendig ist.

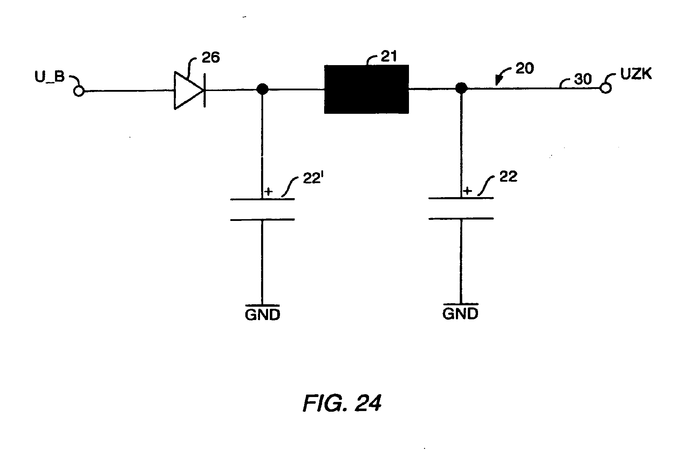

**Fig. 24** zeigt die Verwendung eines Pi-Filters zwischen der Spannungsquelle U_B und dem Gleichstromzwischenkreis 20. Der Elektrolytkondensator 22 stabilisiert wie in Fig. 1 den Gleichstromzwischenkreis, und die Spule 21 und der Elektrolytkondensator 22' bilden den Pi-Filter. Der Pi-Filter ist ein bidirektionaler Filter, der die vom Motor ausgehende so genannte Gegentaktstörung (differential mode) dämpft.

Beispielwerte für die Bauteil:

| | |
|---|---|
| Kondensatoren 22, 22' | 220 μF, max. 75 V |
| Spule 21 | 33 μH, max. 3 A |

Durch das Pi-Filter wird eine Reduzierung der leitungsgebundenen Störausstrahlung erreicht. Die Unterbringung der zusätzlichen Bauteile auf einer Leiterplatte ist aber zum Teil aus Platzgründen schwierig, und es entstehen höhere Kosten als ohne Pi-Filter.

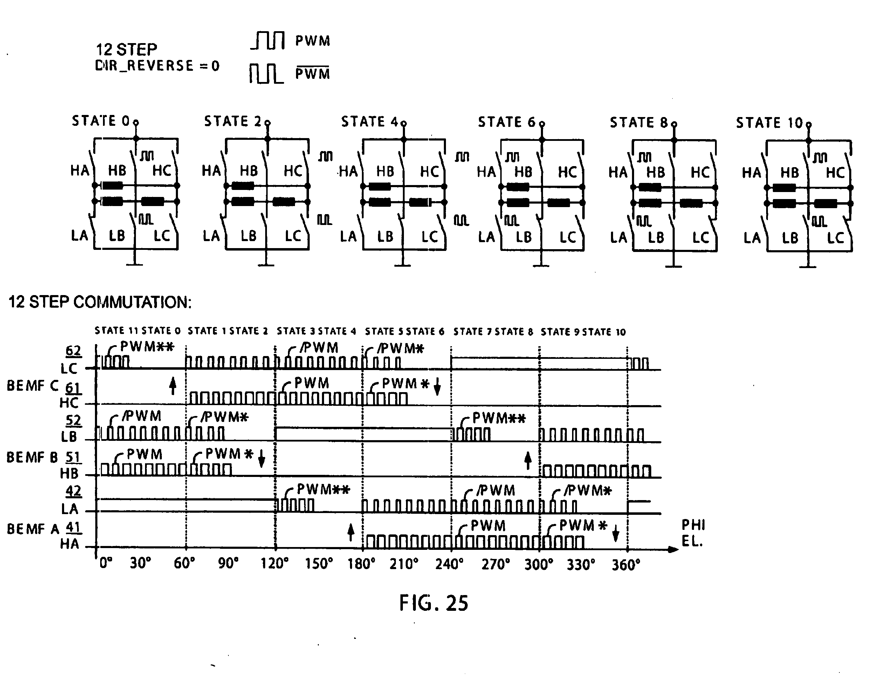

**Fig. 25** zeigt eine weitere Möglichkeit zur Ansteuerung der Endstufe 16. Es handelt sich um eine Zwölf-Schritt-Kommutierung in Vorwärtsrichtung. Anders als in Fig. 3 erfolgt das Ausschalten eines oberen oder unteren Schalters bei der Kommutierung nicht vollständig zum Kommutierungszeitpunkt, sondern der entsprechende Schalter wird langsam abgeschaltet, indem das Tastverhältnis z.B. über einen Winkelbereich von 30 °el. von PWM-Periode zu PWM-Periode verringert wird.

So wird das Tastverhältnis TV* des Ansteuersignals PWM* beim Schalter HB im Bereich 60 °el. bis 90 °el., beim Schalter HC im Bereich 180 °el. bis 210 °el. und beim Schalter HA im Bereich 300 °el. bis 330 °el. jeweils rampenförmig heruntergefahren, hier z.B. in den Schritten von ca. TV* = 70 %, 52,5 %, 35 % und 17,5 %. Die entsprechenden unteren Schalter werden mit dem inversen Signal /PWM* angesteuert.

In gleicher Weise geschieht das Abschalten der unteren Schalter LA, LB, LC rampenförmig, und das Tastverhältnis TV** des Ansteuersignals PWM**, das bei den unteren, eingeschalteten Schaltern durchgehend 100 % = eingeschaltet war, wird beim Schalter LC im Bereich 0 °el bis 30 °el., beim Schalter LA im Bereich 120 °el. bis 150 °el. und beim Schalter LB im Bereich von 240 °el. bis 270 °el. rampenförmig reduziert, hier z.B. in den Schritten TV** = 90 %, 67,5 %, 45 %, 22,5 %.

Diese Art der Kommutierung mit "sanfter Abschaltung" erfordert, dass die entsprechenden Schalter 41, 51, 61, 42, 52, 62 bzw. die drei Brückenzweige 40, 50, 60 der Endstufe 18 mit unterschiedlichen Tastverhältnissen TV, TV*, TV** angesteuert werden können. Bei einer Erzeugung der PWM-Signale in einem μC 23 wird bevorzugt ein μC 23 verwendet, bei dem das Tastverhältnis bei den entsprechenden Ausgängen 241, 251, 261, 242, 252, 262 einstellbar ist. Das langsame Ausschalten ermöglicht es dem Stromregler RGL_I_ave 90 (Fig. 8), den Strom in dem entsprechenden zweiten bestromten Strang bereits vor der Kommutierung langsam zu erhöhen, und die Regelung im Bereich der Kommutierung mit Abschaltung eines oberen oder unteren Schalters wird dadurch stark verbessert. Ein weiterer Vorteil dieser Ansteuerung ist, dass im Vergleich zur Ansteuerung ohne "sanfte Abschaltung" Wicklungen 48, 58, 68 mit mehr Drahtwindungen und damit mit höherer Induktivität verwendet werden können, da der Strom in dem entsprechenden zweiten Strang nicht plötzlich aufgebaut werden muss. Da bei dieser Kommutierungsart keine bzw. nur eine sehr kleine Stromlücke entsteht, kann ein solcher Motor (10) mit nur einem Stromregler betrieben werden. Insbesondere kann die besondere Kompensierung der Stromlücke entfallen.

Das sanfte Abschalten kann z.B. verwirklicht werden, indem jeweils für den Zeitraum 30 °el. in der Interrupt-Routine Low_ISR (Fig. 21) die Anzahl der PWM-Perioden durch einen Zähler PWM_COUNTER gezählt wird, und anschließend z.B. beim Abschalten des Schalters HB im Bereich 60 °el. bis 90 °el. bei der Kommutierung bei 60 °el. einen Wert DELTA_TV aus dem aktuellen Tastverhältnis TV und dem Wert PWM_COUNTER wie folgt zu berechnen

$$\text{DELTA\_TV} = \text{TV} / \text{PWM\_COUNTER}$$

Anschließend kann bei jeder PWM-Periode im entsprechenden Aufruf der Interrupt-Routine Low_ISR bei der Stromregelung das Tastverhältnis für den entsprechenden Schalter um den Wert DELTA_TV verringert werden. Hierdurch wird eine lineare Rampe verwirklicht.

Die Tastverhältnisse TV bzw. TV* der PWM-Signale PWM bzw. PWM* der oberen Schalter 41, 51, 61 unterscheiden sich in den Winkelbereichen der Zustände State 1, 5 und 9. Bei der Erzeugung der PWM-Signale im Center-Aligned-Mode haben jedoch beide PWM-Signale bei einem Tastverhältnis größer als Null einen Puls, und die Messung der Spannung U_34 bzw. U_38 zu diesem Zeitpunkt ergibt weiterhin eine gute Näherung für den Mittelwert U_87 der Spannung U_38 während des Pulses. Für die Berechnung des Mittelwerts U_88 für die gesamte PWM-Periode wird dann gemäß Gleichung (7) in guter Näherung der Wert U_87 mit dem Tastverhältnis TV desjenigen Schalters multipliziert, der nicht rampenförmig abgeschaltet wird.

**Beispielhaft mögliche Modifikationen**

Naturgemäß sind im Rahmen der Erfindung vielfältige Modifikationen möglich. Der Strommesswiderstand bzw. das Strommessglied 36 kann auch in der oberen Leitung 30 angeordnet werden und dort den Eingangsstrom I_M messen, wobei berücksichtigt werden muss, dass keines der Potentiale dem Potential GND entspricht.

Das Strommessglied 36 kann auch außerhalb des Gleichstromzwischenkreises 20, d.h. in Fig. 1 links von dem Zwischenkreiskondensator 22 zur Messung des Stroms

I_IN bzw. I_IN' angeordnet werden. Vorteilhaft daran ist, dass zur Reduzierung der leitungsgebundenen Störausstrahlung gerade der Strom I_IN bzw. I_IN' möglichst konstant sein sollte. Nachteilig ist jedoch, dass der Zwischenkreiskondensator als Energiespeicher dient, was regelungstechnisch zu einer Verzögerung führt, die die Regelung über die als Stellglied verwendete Endstufe 18 verschlechtert.

Der in die Endstufe 16 fließende Strom kann auch durch eine Messung der in den einzelnen Zweigen fließenden Ströme ermittelt werden, wobei dann die in den Strängen fließenden Ströme während des Stromkreisens rechnerisch bzw. durch eine elektronische Schaltung nicht berücksichtigt werden dürfen.

Mit dem Motor ist auch eine Drehmomentregelung möglich, da das Drehmoment proportional zum Strom durch die Wicklung ist. Hierzu gibt man den dem gewünschten Drehmoment entsprechenden Strom-Sollwert I_ave_s vor und lässt bei der Berechnung des Strom-Istwerts I_ave_i in S516 die Multiplikation mit dem Tastverhältnis TV' weg.

## Patentansprüche

1. Motor (20), welcher aufweist:

   Einen permanentmagnetischen Rotor (12);
   einen Stator (14) mit einer mehrsträngigen Wicklungsanordnung (16) mit Wicklungsanschlüssen (45, 55, 65);
   eine Endstufe (18) zur Bestromung der mehrsträngigen Wicklungsanordnung (16);
   eine erste Leitung (30) und eine zweite Leitung (32) zur Verbindung der Endstufe (18) mit einer Gleichspannungsquelle (24);
   wobei die Endstufe (18) zwischen der ersten Leitung (30) und den Wicklungsanschlüssen (45, 55, 65) erste Schalter (41, 51, 61), im Folgenden obere Schalter (41, 51, 61) genannt, aufweist,
   und die Endstufe (18) zwischen der zweiten Leitung (32) und den Wicklungsanschlüssen (45, 55, 65) zweite Schalter (42, 52, 62), im Folgenden untere Schalter (42, 52, 62) genannt, aufweist;
   ein Strommessglied (36) zum Messen eines ersten Signals (U_34; U_38), welches den durch mindestens eine der Leitungen (30, 32) fließenden Strom (I_IN; I_IN'; I_M; I_M') charakterisiert;
   **dadurch gekennzeichnet, dass** der Motor ferner aufweist:

   eine erste Vorrichtung (272, 92) welche dazu ausgebildet ist, in Abhängigkeit vom ersten Signal (U_ 34; U_ 38) einen ersten Wert (I_ave_i) zu ermitteln, welcher den Mittelwert des durch mindestens eine der Leitungen (30, 32) fließenden Stromes (I_IN; I_IN'; I_M; I_M') charakterisiert und einen A/D-Wandler (272) aufweist, dem im Betrieb das erste Signal (U_34; U_38) zugeführt wird, um daraus einen digitalen Wert (I_on) zu erzeugen;
   und der Motor (10) so ausgebildet ist, dass im Betrieb das einem oberen Schalter (41, 51, 61) zugeführte getaktete Signal während einer ersten Zeitdauer (T_I_on) einen ersten Zustand (S-I_on) und während einer zweiten Zeitdauer (T_I_off; T_I_off_1, T_1_off_2) einen zweiten Zustand (S-I_off; S-I_off1, S-I_off2) hat, wobei nur im ersten Zustand (S-I_on) ein Strom (I_M, I_M') über die erste Leitung (30), den entsprechenden oberen Schalter (41, 51, 61), und die zweite Leitung (32), fließt;
   und die erste Vorrichtung (272, 92) dazu ausgebildet ist, während der ersten Zeitdauer (T_I_on) eine A/D-Wandlung des ersten Signals (U_34; U_38) durchzuführen und in Abhängigkeit von dem Ergebnis den ersten Wert (I_ave_i) zu ermitteln;
   einen ersten Regler (90), welcher dazu ausgebildet ist, abhängig vom ersten Wert (I_ave_i) als Istwert und einem zweiten Wert (I_ave_s) als Sollwert einen ersten Stellwert (TV) zu erzeugen;
   und eine erste Steuervorrichtung (280), welche dazu ausgebildet ist, abhängig vom ersten Stellwert (TV) mindestens ein getaktetes Signal zu erzeugen und an die Endstufe (18) auszugeben, um den ersten Wert (I_ave_i) zu beeinflussen und dadurch die Schwankungen des von der Endstufe (18) im Mittel aufgenommenen Stromes zu reduzieren.

2. Motor nach Anspruch 1, bei welchem zwischen der ersten Leitung (30) und der zweiten Leitung (32) ein Kondensator (22) angeordnet ist,
   und bei welchem das Strommessglied (36) einem Leitungsabschnitt der Leitungen (30; 32) zwischen dem Kondensator (22) und der Endstufe (18) zugeordnet ist.

3. Motor nach Anspruch 1, bei welchem zwischen der ersten Leitung (30) und der zweiten Leitung (32) ein Kondensator (22) angeordnet ist,
   und bei welchem das Strommessglied (36) einem Leitungsabschnitt der Leitungen (30; 32) auf der von der (18) abgewandten Seite des Kondensators (22) zugeordnet ist.

4. Motor nach einem der vorhergehenden Ansprüche, welcher dazu ausgebildet ist, beim Abschalten eines Schalters (41, 51, 61, 42, 52, 62) zur Kommutierung das Tastverhältnis (TV*. TV**) des diesem Schalter zugeführten getakteten Signals (PWM*; PWM**) in mehreren Schritten zu verringern, um ein sanftes Ausschalten zu bewirken.

5. Motor nach einem der vorhergehenden Ansprüche, mit einem Mikroprozessor oder Mikrocontroller (23), in welchem die erste Vorrichtung (272, 92), der erste Regler (90), und die erste Steuervorrichtung (280) ausgebildet sind.

6. Motor nach einem der vorhergehenden Ansprüche, bei welchem die Endstufe (18) als Stellglied für den ersten Regler (90) dient.

7. Motor nach einem der vorhergehenden Ansprüche, bei welchem die erste Vorrichtung (272, 92) dazu ausgebildet ist, den ersten Wert (I_ave_i) vor Ablauf eines vorgegebenen Zeitabschnitts (T_PWM) zu bestimmen.

8. Motor nach Anspruch 7, bei welchem die erste Vorrichtung (272, 92) dazu ausgebildet ist, dass erste Signal (U_34; U_38) in dem vorgegebenen Zeitabschnitt (T_PWM) einmal zu erfassen, insbesondere durch eine A/D-Wandlung.

9. Motor nach einem der vorhergehenden Ansprüche, bei welchem die erste Vorrichtung (272, 92) dazu ausgebildet ist, das Tastverhältnis (TV) des getakteten Signals (PWM) in einer Periode (T_PWM) des getakteten Signals (PWM) in Abhängigkeit von dem ersten Wert zu bestimmen, der den Mittelwert des durch mindestens eine der Leitungen (30; 32) fließenden Stroms (I_IN; I_IN'; I_M; I_M') in der vorhergehenden Periode (T_PWM) des getakteten Signals (PWM) charakterisiert.

10. Motor nach einem der vorhergehende Ansprüche, bei welchem das einem oberen Schalter (41, 59, 61) zugeführte getaktete Signal während einer ersten Zeitdauer (T_I_on) einen ersten Zustand (5_I_on) und während einer zweiten Zeitdauer (T-I-off, T_I-off1, T_I_off2) einen zweiten Zustand (S-I_off; S-I_off2) hat, wobei nur im ersten Zustand (S-1_on) ein Strom (I_M, I_M') über die erste Leitung (30), den entsprechenden oberen Schalter (41, 51, 61) und die zweite Leitung (32) fließt; wobei ein dritter Wert (87) für den Mittelwert des ersten Signals (U_34; U_36) im ersten Zustand (S-I_on) ermittelt wird, und der erste Wert (I_ave_i) in Abhängigkeit von dem dritten Wert (87), der ersten Zeitdauer (T_I_on) und der zweiten Zeitdauer (T_I_off) ermittelt wird.

11. Motor nach Anspruch 10, bei welchem der erste Wert (I_ave_i) durch Multiplikation des dritten Werts (87) mit dem Tastverhältnis (TV) des dem entsprechenden oberen Schalter (41, 51, 61) zugeführten getakteten Signals (PWM) ermittelt wird.

12. Motor nach Anspruch 10 oder 11, bei welchem der dritte Wert (87) ermittelt wird, indem das erste Signal (U_34; U_38) zu einem vorgegebenen ersten Zeitpunkt (t_81'; t_83') gemessen wird, zu welchem es den Mittelwert (87) des ersten Signals (U_34; U_38) im ersten Zustand (S-I_on) charakterisiert.

13. Motor nach Anspruch 12, bei welchem die erste Zeitdauer (T_I_on) zusammenhängend ist, und der erste Zeitpunkt (t_81': t_83') in einem Bereich von 30 bis 70 % des Bereichs der ersten Zeitdauer (T_I_on) liegt.

14. Motor nach einem der vorhergehenden Ansprüche, bei welchem das getaktete Signal nach einer Kommutierung, bei der ein oberer oder unterer Schalter (41, 51, 61, 42, 52, 62) abgeschaltet wird, neu gestartet wird.

15. Motor nach Anspruch 14, bei welchem der Startwert des Tastverhältnisses (PWM_LOW, PMW_HIGH) für die erste Periode des getakteten Signals nach der entsprechenden Kommutierung von einem dritten Regler (RGL_I_ave1; RGL_I_ave2) vorgegeben wird.

16. Motor nach einem der vorhergehenden Ansprüche, bei welchem ein zweiter Regler (RGL_n) vorgesehen ist, mit welchem die Drehzahl (n_i) des Motors (10) auf einen gewünschten Drehzahlwert (n_s) geregelt wird, und bei welchem in dem zweiten Regler (RGL_n) ein zweiter Stellwert (I_ave_s) ermittelt wird, welcher dem ersten Regler als zweiter Wert (I_ave_s) zugeführt wird.

## Claims

1. Motor (20), comprising:

a permanent magnetic rotor(12);

a stator (14) having a multi-strand winding arrangement (16) equipped with winding terminals (45, 55, 65);

a power stage (18) for powering the multi-strand winding arrangement (16);

a first lead (30) and a second lead (32) for connecting the power stage (18) to a DC voltage source (24);

wherein the power stage (18) has first switches (41, 51, 61), hereinafter called upper switches (41, 51, 61), between the first lead (30) and the winding terminals (45, 55, 65),

and wherein the power stage (18) has second switches (42, 52, 62), hereinafter called lower (32) switches (41, 51, 61) between the second lead and the winding terminals (45, 55, 65);

a current measuring element (36) for measuring a first signal (U_34; U_38), which characterizes the current (I_IN; I_IN'; I_M; I_M') flowing through at least one of the leads (30, 32);

**characterized in that** the motor also comprises:

a first device (272, 92) designed to determine, as a function of the first signal (U_34; U_38), a first value (I_ave_i) which characterizes the average value of the current (I_IN; I_IN'; I_M; I_M') flowing through at least one of the leads (30, 32), the first device also comprising an analogue-to-digital converter (272) which, during operation, receives the first signal (U_34; U_38) in order therefrom to generate a digital value (I_on); and the motor (10) being designed so that, during operation, the clocked signal applied to an upper switch (41, 51, 61) has a first state (S-I_on) during a first length of time (T-I_on) and a second state (S-I_off, S-I_off1, S-I_off2) during a second length of time (T_I_off, T_I_off1, T_I_off2), a current (I_M; I_M') flowing only during the first state (S-I_on) via the first lead (30), the corresponding upper switch (41, 51, 61), and the second lead (32);

and the first device (272, 92) being designed to perform an analogue-to-digital conversion of the first signal (U_34; U_38) during the first length of time (T_I_on) and, as a function of the result, to determine the first value (I_ave_i);

a first controller (90) being designed, as a function of the first value (I_ave_i) as the current value, and of a second value (I_ave_s) as the target value, to generate a first control value (TV);

and a first control device (280) which is designed, as a function of the first control value (TV), to generate at least one clocked signal and to output the signal to the power stage (18), in order to influence the first value (I_ave_i) and thereby to reduce fluctuations in average power consumption by the power stage (18).

2. Motor according to claim 1, wherein a capacitor (22) is arranged between the first lead (30) and the second lead (32), and wherein the current measuring element (36) is assigned to a segment of the leads (30, 32) between the capacitor (22) and the power stage (18).

3. Motor according to claim 1, wherein a capacitor (22) is arranged between the first lead (30) and the second lead (32), and wherein the current measuring element (36) is assigned to a segment of the leads (30, 32) on the side of the capacitor (22) that is averted from the power stage (18).

4. Motor according to one of the preceding claims, which is designed, when turning off a switch (41, 51, 61, 42, 52, 62), to reduce the duty cycle (TV*, TV**) of the clocked signal (PWM*, PWM**) applied to said switch (41, 51, 61, 42, 52, 62), for commutation in a plurality of steps, in order to effect a gentle power-off.

5. Motor according to one of the preceding claims, having a microprocessor or microcontroller (23) within which the first device (272, 92), the first controller (90) and the first control device (280) are embodied.

6. Motor according to one of the preceding claims, wherein the power stage (18) serves as an actuator for the first controller (90).

7. Motor according to one of the preceding claims, wherein the first device (272, 92) is designed to determine the first value (I_ave_i) prior to expiration of a predetermined period of time (t_PWM).

8. Motor according to claim 7, wherein the first device (272, 92) is designed to capture the first signal (U_34; U_38) once in the predetermined period (T_PWM), in particular by an analogue-to-digital conversion.

9. Motor according to one of the preceding claims, wherein the first device (272, 92) is designed to determine the duty ratio (TV) of the clocked signal (PWM) in a period (T_PWM) of the clocked signal, as a function of the first value, which characterizes the average value of the current (I_IN; I_IN'; I_M; I_M';) flowing through at least one of the leads (30, 32) in the preceding period (T_PWM) of the clocked signal (PWM).

10. Motor according to one of the preceding claims, wherein the clocked signal applied to an upper switch (41, 51, 61) has a first state (S_I_on) during a first length of time (T_I_on) and a second state (S_I_off; S_I_off2) during a second length of time (T_I_off; T_I_off1; T_I_off2), a current (I_M, I_M') flowing only via the first lead (30), the corresponding upper switch (41, 51, 61), and the second lead (32) only during the first state (S-I_on), a third value (87) being determined for 36 the average value of the first signal (U_34; U_36) during the first state (S_I_on), and the first value (I_ave_i) being determined as a function of the third value (87), the first length of time (T_I_on) and the second length of time (T_I_off).

11. Motor according to Claim 10, wherein the first value (I_ave_i) is determined by multiplying the third value (87) by the duty ratio (TV) of the clocked signal (PWM) applied to the corresponding upper switch (41, 51, 61).

12. Motor according to Claim 10 or 11, wherein the third value (87) is determined by measuring the first signal (U_34; U_38) at a predetermined first time instant (t_81'; t_83'), for which it characterizes the average value (87) of the first signal (U_34; U_38) in the first state (S-I_on).

13. Motor according to Claim 12, wherein the first length of time (T_I_on) is continuous and the first time instant (t_81'; t_83) lies within a range of 30% to 70% of the range covered by the first length of time (T_I_on).

14. Motor according to one of the preceding claims, wherein, subsequent to a commutation in which one of the upper or lower switches (41, 51, 61, 42, 52, 62) is turned off, the clocked signal is restarted.

15. Motor according to Claim 14, wherein the starting value of the duty ratio (PWM_LOW; PMW_HIGH) for the first period of the clocked signal is predetermined by a third controller (RGL_I_ave 1; RGL_I_ave2) following the corresponding commutation.

16. Motor according to one of the preceding claims, wherein a second controller (RGL_n) is provided which is used to regulate the speed (n_i) of the motor (10), to a target motor speed (n_s), and wherein, in the second controller (RGL_n), a second control value (I_ave_s) is determined, which is applied to the first controller (90) as the second value (I_ave_s).

**Revendications**

1. Moteur (20), lequel présente :

un rotor à aimant permanent (12) ;
un stator (14) avec un arrangement d'enroulement à plusieurs phases (16) avec des connexions d'enroulement (45, 55, 65) ;
un étage final (18) pour l'alimentation de l'arrangement d'enroulement à plusieurs phases (16) ;
une première ligne (30) et une deuxième ligne (32) servant à relier l'étage final (18) à une source de tension continue (24) ;
l'étage final (18) présentant des premiers commutateurs (41, 51, 61), appelés dans la suite commutateurs supérieurs (41, 51, 61), entre la première ligne (30) et les connexions d'enroulement (45, 55, 65),
et l'étage final (18) présentant des deuxièmes commutateurs (42, 52, 62), appelés dans la suite commutateurs inférieurs (42, 52, 62), entre la deuxième ligne (32) et
les connexions d'enroulement (45, 55, 65),
un organe de mesure de courant (36) pour mesurer un premier signal (U_34 ; U_38) qui caractérise le courant (I_IN ; I_IN' ; I_M; I_M') qui circule à travers au moins une des lignes (30, 32) ;
**caractérisé en ce que** le moteur présente en outre :

un premier dispositif (272, 92) qui est conçu pour déterminer, en fonction du premier signal (U_34 ; U_38), une première valeur (I_ave_i) qui caractérise la moyenne du courant (I_IN ; I_IN' ; I_M ; I_M') qui circule à travers au moins une des lignes (30, 32) et présente un convertisseur A/N (272) auquel est amené, en fonctionnement, le premier signal (U_34 ; U_38) pour générer à partir de celui-ci une valeur numérique (I_on) ;
et le moteur (10) est conçu de façon qu'en fonctionnement le signal cadencé amené à un commutateur supérieur (41, 51, 61) a pendant une première durée (T_I_on) un premier état (S-I_on) et pendant une deuxième durée (T_I_off; T_I_off1_1, T_I_off_2) un deuxième état (S-I_off ; S-I_off1, S-I_off2), un courant (I_M ; I_M') ne circulant par la première ligne (30), le commutateur supérieur (41, 51, 61) correspondant et la deuxième ligne (32) que dans le premier état (S-I_on) ;

et le premier dispositif (272, 92) étant conçu de manière à effectuer une conversion A/N du premier signal (U_34 ; U_38) pendant la première durée (T_I_on) et à déterminer la première valeur (I_ave_i) en fonction du résultat ;

un premier régulateur (90) qui est conçu pour générer une première valeur de réglage (TV) comme valeur réelle en fonction de la première valeur (I_ave_i) et

comme valeur de consigne en fonction d'une deuxième valeur (I_ave_s) ;

et un premier dispositif de commande (280) qui est conçu pour générer au moins un signal cadencé en fonction de la première valeur de réglage (TV) et pour le délivrer à l'étage final (18) pour influencer la première valeur (I_ave_i) et réduire de ce fait les fluctuations du courant absorbé en moyenne par l'étage final (18).

2. Moteur selon la revendication 1, dans lequel un condensateur (22) est disposé entre la première ligne (30) et la deuxième ligne (32),
   et dans lequel l'organe de mesure de courant (36) est associé à une portion de ligne des lignes (30 ; 32) entre le condensateur (22) et l'étage final (18).

3. Moteur selon la revendication 1, dans lequel un condensateur (22) est disposé entre la première ligne (30) et la deuxième ligne (32),
   et dans lequel l'organe de mesure de courant (36) est associé à une portion de ligne des lignes (30 ; 32) du côté du condensateur (22) éloigné de l'étage final (18).

4. Moteur selon une des revendications précédentes, lequel est conçu pour, lors de la coupure d'un commutateur (41, 51, 61, 42, 52, 62) en vue de la commutation, diminuer en plusieurs étapes le rapport cyclique (TV*, TV**) du signal cadencé (PWM*, PWM**) amené à ce commutateur pour produire une coupure progressive.

5. Moteur selon une des revendications précédentes, avec un microprocesseur ou un microcontrôleur (23) dans lequel le premier dispositif (272, 92), le premier régulateur (90) et le premier dispositif de commande (280) sont réalisés.

6. Moteur selon une des revendications précédentes, dans lequel l'étage final (18) sert d'organe de commande pour le premier régulateur (90).

7. Moteur selon une des revendications précédentes, dans lequel le premier dispositif (272, 92) est conçu pour déterminer la première valeur (I_ave_i) avant expiration d'un intervalle de temps prédéfini (T_PWM).

8. Moteur selon la revendication 7, dans lequel le premier dispositif (272, 92) est conçu pour détecter le premier signal (U_34 ; U_38) une fois dans l'intervalle de temps prédéfini (T_PWM), en particulier par une conversion A/N.

9. Moteur selon une des revendications précédentes, dans lequel le premier dispositif (272, 92) est conçu pour déterminer le rapport cyclique (TV) du signal cadencé (PWM) dans une période (T_PWM) du signal cadencé (PWM) en fonction de la première valeur, laquelle caractérise la moyenne du courant (I_IN ; I_IN' ; I_M ; I_M') qui circule à travers au moins une des lignes (30, 32) dans la période précédente (T_PWM) du signal cadencé (PWM).

10. Moteur selon une des revendications précédentes, dans lequel le signal cadencé amené à un commutateur supérieur (41, 51, 61) a pendant une première durée (T_I_on) un premier état (S-I_on) et pendant une deuxième durée (T_I_off; T_I_off1, T_I_off2) un deuxième état (S-I_off ; S-I_off2), un courant (I_M ; I_M') ne circulant par la première ligne (30), le commutateur supérieur (41, 51, 61) correspondant et la deuxième ligne (32) que dans le premier état (SI_on), une troisième valeur (87) pour la moyenne du premier signal (U_34 ; U_38) dans le premier état (S-I_on) étant déterminée, et la première valeur (I_ave_i) étant déterminée en fonction de la troisième valeur (87), de la première durée (T_I_on) et de la deuxième durée (T_I_off).

11. Moteur selon la revendication 10, dans lequel la première valeur (I_ave_i) est déterminée par multiplication de la troisième valeur (87) avec le rapport cyclique (TV) du signal cadencé (PWM) amené au commutateur supérieur (41, 51, 61) correspondant.

**12.** Moteur selon la revendication 10 ou 11, dans lequel la troisième valeur (87) est déterminée en mesurant le premier signal (U_34 ; U_38) à un premier instant prédéfini (t_81' ; t_83') auquel il caractérise la moyenne (87) du premier signal (U_34 ; U_38) dans le premier état (S-I_on).

**13.** Moteur selon la revendication 12, dans lequel la première durée (T_I_on) est continue et le premier instant (t_81' ; t_83') se situe dans une plage comprise entre 30 et 70 % de la plage de la première durée (T_I_on).

**14.** Moteur selon une des revendications précédentes, dans lequel le signal cadencé est redémarré après une commutation lors de laquelle un commutateur supérieur ou inférieur (41, 51, 61, 42, 52, 62) est coupé.

**15.** Moteur selon la revendication 14, dans lequel la valeur de départ du rapport cyclique (PWM_LOW ; PWM_HIGH) pour la première période du signal cadencé après la commutation correspondante est prédéfinie par un troisième régulateur (RGL_I_ave1 ; RGL_I_ave2).

**16.** Moteur selon une des revendications précédentes, dans lequel il est prévu un deuxième régulateur (RGL_n) qui est utilisé pour régler la vitesse de rotation (n_i) du moteur (10) à une valeur de vitesse de rotation souhaitée (n_s), et dans lequel une deuxième valeur de réglage (I_ave_s), qui est amenée au premier régulateur en tant que deuxième valeur (I_ave_s), est déterminée dans le deuxième régulateur (RGL_n).

FIG. 1

EP 2 220 755 B1

## 6 STEP COMMUTATION:

**FIG. 2**

| STATE 0 | STATE 2 | STATE 4 | STATE 6 | STATE 8 | STATE 10 |
|---------|---------|---------|---------|---------|----------|

BEMF C

62 LC
61 HC

BEMF B

52 LB
51 HB

BEMF A

42 LA
41 HA

74

PHI EL.

0°  60°  120°  180°  240°  300°  360°

## 12 STEP COMMUTATION:

**FIG. 3**

| STATE 11 | STATE 0 | STATE 1 | STATE 2 | STATE 3 | STATE 4 | STATE 5 | STATE 6 | STATE 7 | STATE 8 | STATE 9 | STATE 10 |

BEMF C

62 LC
61 HC

BEMF B

52 LB
51 HB

BEMF A

42 LA
41 HA

74

PHI EL.

0°  30°  60°  90°  120°  150°  180°  210°  240°  270°  300°  330°  360°

*FIG. 4*

FIG. 5

12 STEP COMMUTATION:

STATE 1 STATE 0  STATE 11 STATE 10  STATE 9 STATE 8  STATE 7 STATE 6  STATE 5 STATE 4  STATE 3 STATE 2

STATE 0  STATE 10  STATE 8  STATE 6  STATE 4  STATE 2

HA HB HC  LA LB LC

62 LC
BEMF C 61 HC
52 LB
BEMF B 51 HB
42 LA
BEMF A 41 HA

0°  30°  60°  90°  120°  150°  180°  210°  240°  270°  300°  330°  360°

PHI EL.

74

⊓⊔ PWM  ↑ POSITIVE
⊓⊔ P̄W̄M̄  ↓ NEGATIVE

FIG. 6

FIG. 7

EP 2 220 755 B1

FIG. 8

FIG. 9

EP 2 220 755 B1

FIG. 10

FIG. 11

EP 2 220 755 B1

FIG. 12

EP 2 220 755 B1

FIG. 13

REMOTE ENABLE

GO TO LOCAL

19-JUN-07
13:46:37

1 ms
0.50 V

I_ln /[A]

109

0.5A

1ms

t /[s]

| | PKPK (4) | 1.938 A |
| | MEAN (4) | 1.6531 A |
| | SDEV (4) | 451.0 mA |
| | RMS (4) | 1.7135 A |
| | AMPL (4) | 1.610 A |

4 DC 1.55 A

25 MS / s

☐ STOPPED

| 1 ms | | | |
| 1 | -5 | V DC | ×20 |
| 2 | 1 | V DC | ×20 |
| 3 | -2 | V DC | ×10 |
| 4 | -5 | V DC | |

FIG. 14

A : MAG^2   RANGE: -1 dBV   STATUS: PAUSED

-10 dBm

10dB

10dB / DIV

-90

110

111

CENTER: 10 000Hz   BW: 190.97Hz   SPAN: 20 000Hz

0kHz   2kHz   20kHz

FIG. 15

*FIG. 16*

FIG. 17

FIG. 18

EP 2 220 755 B1

| MOTSTATE | 28 | 14 | | 12 | 30 | 22 |
|---|---|---|---|---|---|---|
| STATE | 10 | 11 | | 0 | 0 | 1 |
| DELAY_CNT | 0 0 0 0 0 0 0 0 0 | | | 4 3 2 1 0 | 0 0 0 0 | |

HIGH PRIORITY INTERRUPT

HT1

HT1
TV

HCOMP

HT1

MAIN_LOOP_START

HIGH_ISR

LOW PRIORITY INTERRUPT

143

LT   LT   LT   LT   LT   LT   LT   LT   LT   LT

LA  LA  LA  LA  LA  LA  LA  LA  LA  LA  LA  LA  LA  LA  LA  LA  LA  LA  LA  LA  LA  LA

0°el. 0µs    100µs    200µs    300µs    30°el. 450µs    600µs    700µs    800µs    60°el. 900µs

t_160    t_161    165    t_163    t_162

TIMER 1

BEMF_TIME         T_MEAS         COM_TIME

DISABLE RGL_I
DISABLE LA

CALC BEMF_TIME
CALC COM_TIME
STORE t_COMP

CALC_n

RESTART PWM_TIMER
ENABLE LA
DELAY_CNT:=DELAY_CNT_START
ENABLE_RGL_I
TV:=PWM_LOW

TV_START:=RGL_TV_START
PWM_LOW:=RGL_I_ave_3

BEMF_SENSE_START

FIG. 19

```
                              ┌──────────────┐ ┌─ S400
                              │    main()    │─┘
                              └──────┬───────┘
          ┌──────────────────────────────────────────────┐ ─ S402
          │              INIT  μC                         │
          │            Mainstate = 0                      │
          │       Timer0 -> ‚Low Priority Interrupt'       │
          │   OVERFLOW(Timer1) -> ‚High Priority Interrupt' │
          │     DELAY_CNT := DELAY_CNT_START              │
          └──────────────────┬───────────────────────────┘
                  ┌───────────────────────┐ ─ S404
                  <    Maintimer = 100     >
                  └───────────┬───────────┘
                  ┌───────────────────┐ ─ S406
                  <   Mainstate == 2?   >── N
                  └─────────┬─────────┘
                            │ Y      ┌─ S408
                  ┌─────────────────────────┐
                  │ wait for ADC release from I_RGL │
                  └─────────┬───────────────┘
                  ┌─────────────────────────┐ ─ S410
                  /   get CTRL_VAL from ADC   /
                  └─────────┬───────────────┘
                  ┌─────────────────────────┐ ─ S412
                  /   measure UZK with ADC    /
                  └─────────┬───────────────┘ ─ S414
                  ┌─────────────────────────┐
                  │      calculate n_s        │
                  └─────────┬───────────────┘ ─ S416
                  ┌─────────────────────────┐
                  <       Mainstate?         >
                  └──────────┬──────────────┘
```

| Mainstate == 0 WAIT n_s > 0 (S418) | Mainstate == 1 STARTUP (S440) | Mainstate == 2 RGL_n (S460) | Mainstate == 3 SHUTDOWN (S470) |
|---|---|---|---|

```
 S420                    S442                 S462
< UZK OK? >           < n_i > n_start? >─N  < n_s > n_stop? >─N
    │Y ─S422              │Y        │           │Y      │
< n_s > 0? >─N            │      ┌──────┐    │    ┌──────────┐ ─S468
    │Y ─S424              │      │INC TV│    │    < Mainstate=3 >
< INIT Timer1 >           │      └──────┘    │    └──────────┘
< FOR STARTUP >           │       S452       │
    │ ─S426           ┌─────────┐ ─S444   ┌──────────────┐ ─S464   ┌──────────────┐ ─S472
┌────────────┐        < Startup=0 >       │   RGL_n:     │        < Motstate = 2  >
│   set TV    │        └────┬────┘        │              │        < Mainstate = 0  >
│ for startup │         ┌─────────┐ ─S446 │ e =n_s - n_i │        └──────┬───────┘ ─S474
└─────┬──────┘ ─S428   < COMMUT:  >       │ I-Controller │        ┌──────────────┐
┌────────────┐         < 12 STEP  >       │limit target value│    │ RGL_I_ave_1  │
< COMMUT:    >         └────┬────┘        │              │        │    OFF       │
< 6 STEP     >         ┌─────────┐ ─S448  │ update I_ave_s│        └──────────────┘
└─────┬──────┘ ─S430   < Mainstate= >     └──────┬───────┘
┌────────────┐         < 2          >     ┌──────────────┐ ─S466
< Startup = 1 >        └────┬────┘ ─S450  │    START      │
< Motstate = 6 >       ┌─────────┐        │‚Special Event Triggered│
< Mainstate = 1 >      │RGL_I_ave_1 ON│   │ ADC' FOR RGL_n│
└────────────┘         └─────────┘        └──────────────┘
```

```
        S480 ─┐  ┌───────────────┐
              └──<  Maintimer == 0? >── N
                 └───────┬───────┘
                         │ Y
```

## Fig. 20

Fig. 21

| Fig. 22A |
| Fig. 22B |
| Fig. 22C |
| Fig. 22D |
| Fig. 22E |

# Fig. 22

**Fig. 22A**

High ISR
(High Priority Interrupt' Routine) — S600

S602 — Motstate?

S604
Motstate == 0
fan off

S606
all FETs off

S608
End ISR

S610
Motstate == 2
brake fan

S612
upper FETs off

S614
lower FETs on

S615
End ISR

S616
Motstate == 4
BEMF sensing A pos.

S618
Comp pos.?
yes:
no: → A

S634
Startup?

S636
==1: init Timer1 for startup → C
==0: → End ISR — S638

S620
DIR?

S622
FW: Motstate = 34 → B
BW:

S624
Comm.?

S626
6S: Motstate = 36
12S: Motstate = 38
S628

B

S630
calculate
BEMF- & COM-Time

S632
End ISR

S640
Motstate == 6
start BEMF sensing A pos.

S642
Comm.?

S644
6S: start BEMF sensing A pos.
12S: even commutation
S646

S648
Motstate = 4

S650
End ISR

S652
DIR?

S654
FW: State 4
BW: State 10
S656

S660
prepare BEMF
sensing A pos.

S662
Motstate = 4

S664
TV = PWM_LOW

S666
restart
PWM-Timer

S668
DELAY_CNT =
DELAY_CNT_START

S670
start I_CTRL

S672
End ISR

XA

## Fig. 22B

XA

S676

Motstate == 8
BEMF sensing B pos. → Comp. pos.? → yes: / no: → D  F → DIR? → FW: Motstate = 38 → E  BW: → Comm.?

6S: Motstate = 28
12S: Motstate = 30 → E → calculate BEMF- & COM-Time → End ISR  D → Startup? → ==1: init Timer1 for startup → F  ==0: → End ISR

S700

Motstate == 10
start BEMF sensing B pos. → Comm.? → 6S: start BEMF sensing B pos. → Motstate = 8 → End ISR  12S: even commutation → DIR? → FW: State 8  BW: State 2

prepare BEMF sensing B pos. → Motstate = 8 → TV = PWM_LOW → restart PWM-Timer → DELAY_CNT = DELAY_CNT_START → start I_CTRL → End ISR

S736

Motstate == 12
BEMF sensing C pos. → Comp. pos? → S738 → yes: S740 / no: S742 → G  I → DIR? S744 → FW: Motstate = 30 S746 → H  BW: S748 → Comm.? S750

6S: Motstate = 32 S751
12S: Motstate = 34 S752 → H → calculate BEMF- & COM-Time S753 → End ISR S754  G → Startup? S755 → ==1: init Timer1 for startup S756 → I  ==0: → End ISR S757

S760

Motstate == 14
start BEMF sensing C pos. → Comm.? S762 → 6S: start BEMF sensing C pos. S764 → Motstate = 12 S768 → End ISR S770  12S: even commutation S766 → DIR? S772 → FW: State 0 S774  BW: State 6 S776

prepare BEMF sensing C pos. S780 → Motstate = 12 S782 → TV = PWM_LOW S784 → restart PWM-Timer S786 → DELAY_CNT = DELAY_CNT_START S788 → start I_CTRL S790 → End ISR S792

XB

45

**Fig. 22C**

XB

S796

Motstate == 16
BEMF sensing A neg.

Comp. neg.?

yes:
no:

J  L

DIR?

FW: Motstate = 28  K

BW:

Comm.?

6S: Motstate = 30  K
12S: Motstate = 32

calculate
BEMF- & COM-Time

End ISR

J  Startup?

==1: init Timer1 for startup  L

==0:

End ISR

S830

Motstate == 18
start BEMF sensing A neg.

Comm.?

6S: start BEMF sensing A neg.  Motstate = 16  End ISR

12S: even commutation

DIR?

FW: State 10

BW: State 4

prepare BEMF
sensing A neg.

Motstate
= 16

TV = PWM_HIGH

restart
PWM-Timer

DELAY_CNT =
DELAY_CNT_START

start I_CTRL  End ISR

S866

Motstate == 20
BEMF sensing B neg.

Comp. neg.?

yes:
no:

M  O

DIR?

FW: Motstate = 32  N

BW:

Comm.?

6S: Motstate = 34  N
12S: Motstate = 36

calculate
BEMF- & COM-Time

End ISR

M  Startup?

==1: init Timer1 for startup  O

==0:

End ISR

XC

**Fig. 22D**

XC

S890
Motstate == 22
start BEMF sensing B neg. → Comm.? →
- 6S: start BEMF sensing B neg. → Motstate = 20 → End ISR → DIR? →
  - FW: State 2
  - BW: State 8
- 12S: even commutation

prepare BEMF sensing B neg. → Motstate = 20 → TV = PWM_HIGH → restart PWM-Timer → DELAY_CNT = DELAY_CNT_START → start I_CTRL → End ISR

S926
Motstate == 24
BEMF sensing C neg. → Comp. neg.? →
- yes:
- no: → P → R
→ DIR? →
- FW: Motstate = 36 → Q → Comm.?
- BW:

6S: Motstate = 38
12S: Motstate = 28
→ Q → calculate BEMF- & COM-Time → End ISR → P → Startup? →
- ==1: init Timer1 for startup → R
- ==0: → End ISR

S950
Motstate == 26
start BEMF sensing C neg. → Comm.? →
- 6S: start BEMF sensing C neg. → Motstate = 24 → End ISR → DIR? →
  - FW: State 6
  - BW: State 0
- 12S: even commutation

prepare BEMF sensing C neg. → Motstate = 24 → TV = PWM_HIGH → restart PWM-Timer → DELAY_CNT = DELAY_CNT_START → start I_CTRL → End ISR

XD

XD

Fig. 22E

S1000
Motstate == 28
Comm. State 11

S1002
Komm.?

S1004
6S: State 0

S1006
12S: State 11

S1008
DIR?

S1010
FW: Motstate = 14

S1012
BW: Motstate = 6

S1014
load Timer1
with BEMF-Time

S1016
End ISR

S1020
Motstate == 30
Comm. State 1

Komm.?

6S: State 2

12S: State 1

DIR?

FW: Motstate = 22

BW: Motstate = 26

load Timer1
with BEMF-Time

End ISR

S1040
Motstate == 32
Comm. State 3

Komm.?

6S: State 4

12S: State 3

DIR?

FW: Motstate = 6

BW: Motstate = 10

load Timer1
with BEMF-Time

End ISR

S1060
Motstate == 34
Comm. State 5

Komm.?

6S: State 6

12S: State 5

DIR?

FW: Motstate = 26

BW: Motstate = 18

load Timer1
with BEMF-Time

End ISR

S1080
Motstate == 36
Comm. State 7

Komm.?

6S: State 8

12S: State 7

DIR?

FW: Motstate = 10

BW: Motstate = 14

load Timer1
with BEMF-Time

End ISR

S1100
Motstate == 38
Comm. State 9

Komm.?

6S: State 10

12S: State 9

DIR?

FW: Motstate = 18

BW: Motstate = 22

load Timer1
with BEMF-Time

End ISR

FIG. 23

*FIG. 24*

12 STEP
DIR_REVERSE = 0

⊓⊔ PWM

⎍ $\overline{PWM}$

STATE 0    STATE 2    STATE 4    STATE 6    STATE 8    STATE 10

12 STEP COMMUTATION:

FIG. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6366483 B1
- US 20050206341 A1
- US 4446414 A
- EP 1767434 A2
- EP 1347567 A1
- WO 2006037966 A1